# FASCICULE DE BREVET EUROPEEN

(11) **EP 4 531 637 B1**
(45) Date de publication et mention de la délivrance du brevet: **22.04.2026**
(21) Numéro de dépôt: 23730504.0
(22) Date de dépôt: 02.06.2023
(51) Int. Cl.: A47J 17/16, A23N 7/02

(54) **DISPOSITIF ET APPAREIL DE PRÉPARATION CULINAIRE POUR PRATIQUER UNE DÉCOUPE HÉLICOÏDALE SUR UN FRUIT OU UN LÉGUME**
LEBENSMITTELZUBEREITUNGSVORRICHTUNG UND VORRICHTUNG ZUR HERSTELLUNG EINES SPIRALFÖRMIGEN SCHNITTES IN EINER FRUCHT ODER IN EINEM GEMÜSE
FOOD PREPARATION DEVICE AND APPARATUS FOR MAKING A HELICAL CUT IN A FRUIT OR VEGETABLE

(30) Priorité: 03.06.2022 FR 2205387
(43) Date de publication de la demande: 09.04.2025
(73) Titulaire: SEB S.A., 69130 Ecully (FR)
(72) Inventeur: DOAT, Géraldine, 69134 ECULLY CEDEX (FR); GARNIER, Robin, 69134 ECULLY CEDEX (FR); DOS SANTOS, Quentin, 69134 ECULLY CEDEX (FR)
(74) Mandataire: SEB Développement
(86) Numéro de dépôt international: PCT/EP2023/064878
(87) Numéro de publication internationale: WO 2023/233021

(56) Documents cités:
- CN-A- 113 080 681
- CN-U- 206 777 199
- US-A- 4 765 234
- US-A- 5 957 045
- US-A1- 2006 065 134

## Description

### Domaine Technique

L'invention concerne un dispositif de préparation culinaire pour pratiquer une découpe hélicoïdale sur un fruit ou un légume, et un appareil motorisé muni d'un tel dispositif.

En pratiquant une découpe hélicoïdale sur un fruit ou un légume, on peut, en fonction de l'outil de découpe utilisé, et de la profondeur de découpe, par exemple assurer l'épluchage du fruit ou légume, c'est-à-dire prélever une pellicule externe du fruit ou légume, par exemple la peau ou l'écorce du fruit ou légume, de préférence sur une portion substantielle du fruit ou légume, et de préférence sur une portion continue de la surface externe du fruit ou légume. Toutefois, une découpe hélicoïdale peut être mise en œuvre pour prélever non plus une pellicule externe de faible épaisseur, afin de peler le fruit ou le légume, mais par exemple pour prélever une spirale comprenant également la chair du fruit ou légume, ou même plusieurs spirales, afin de découper le fruit ou le légume. De telles découpes de la chair du fruit ou légume seront alors essentiellement hélicoïdales. Selon l'épaisseur de chair ôtée, ces découpes pourront former plutôt un « spaghetti », lorsqu'une faible partie de l'épaisseur est découpée, ou plutôt une spirale, lorsqu'une partie plus importante de l'épaisseur est ôtée. Une telle spirale pourra être dépliée. Une telle découpe hélicoïdale ne prélève pas, ou quasiment pas, de matière. Une telle découpe hélicoïdale dans la chair du fruit ou légume permet par exemple d'obtenir une présentation originale du fruit ou légume dans un objectif culinaire, ou d'utiliser des techniques de cuisson ou d'infusion du fruit ou légume permettant une meilleure pénétration de la cuisson ou de l'infusion dans la profondeur de la chair du fruit ou légume.

Selon l'invention, le dispositif est destiné à former, avec une base motorisée, un appareil motorisé de préparation culinaire pour pratiquer une découpe hélicoïdale sur un fruit ou un légume. Le dispositif pourra par exemple se présenter sous la forme d'un accessoire amovible susceptible d'être monté et démonté facilement par l'utilisateur sur une base motorisée, le moteur de la base motorisée permettant d'assurer le fonctionnement du dispositif. Toutefois, le dispositif pourra aussi se présenter sous la forme d'une partie intégrée, non démontable, d'un appareil comportant par ailleurs une telle base motorisée. Au sens du présent brevet, un assemblage ou un montage ou une fixation sont considérés comme amovibles ou démontables dès lors qu'un tel un assemblage, montage ou fixation a vocation à être mis en œuvre sans difficulté par un utilisateur de l'appareil de préparation culinaire, c'est-à-dire une personne engagée habituellement dans l'activité de préparation culinaire, sans outil particulier ou avec un outil particulièrement simple permettant par exemple de faciliter un desserrage ou de faciliter un déverrouillage d'un verrou de sécurité.

### Technique antérieure

Le document CN206777199-U décrit un exemple d'un dispositif qui est une partie intégrée d'un appareil motorisé de préparation culinaire pour éplucher des ananas. Ce dispositif comporte un support, qui est ici aussi un châssis de l'appareil, et qui est donc fixe lors du fonctionnement du dispositif et de l'appareil. Le dispositif comporte un entraîneur principal configuré pour porter le fruit ou légume et pour entraîner le fruit ou légume en rotation autour d'un axe principal par rapport au support. Le dispositif comporte un porte-outil qui est configuré pour porter un outil de découpe et qui est porté par un chariot. Le porte-outil est articulé et est muni de moyens de rappels élastiques qui tendent à plaquer l'outil de découpe contre la surface externe de l'ananas qui est placé sur l'entraîneur principal. Le chariot est entraîné en translation par rapport au support, suivant un mouvement alternatif de sens aller et de sens retour selon une direction de translation de chariot qui est parallèle à l'axe principal, par une vis d'entraînement à double hélice qui présente un axe de vis parallèle à l'axe principal. La vis d'entraînement est rotative par rapport au support, autour de son axe de vis. La vis d'entraînement comprend un filet aller et un filet retour, le filet aller et le filet retour s'étendant tous les deux au moins sur la longueur d'un segment commun de la vis d'entraînement, la longueur du segment commun étant supérieure ou égale à une course maximale du chariot. Le chariot coopère avec le filet aller de la vis d'entraînement pour causer une translation en sens aller du chariot selon la direction de translation de chariot, et avec le filet retour de la vis d'entraînement pour causer une translation en sens retour selon la direction de translation de chariot. L'appareil assure simultanément l'entraînement en rotation de l'entraîneur principal, donc de l'ananas qui est placé dessus, et de la vis entraînement. Ainsi, le déplacement de l'axe d'entraînement provoque, simultanément à la rotation de l'ananas, un déplacement du chariot et donc de l'outil de découpe. Du fait de ce mouvement relatif, l'outil de découpe assure un épluchage de l'ananas selon une découpe hélicoïdale d'une bande d'écorce au fur et à mesure de la rotation du fruit et de la translation de l'outil de découpe selon une direction parallèle à l'axe de la rotation du fruit.

L'utilisation d'une vis d'entraînement à double hélice permet, sans changer le sens de rotation du moteur, ni le sens de rotation relatif entre la vis d'entraînement et l'entraîneur principal, d'assurer un mouvement aller, par exemple du haut vers le bas, et un mouvement retour, par exemple du bas vers le haut.

Dans le document CN206777199-U il est précisé que les extrémités des filets aller et retour de la vis d'entraînement à double hélice se rejoignent aux extrémités de leur segment commun sur la vis d'entraînement. Ainsi, lorsque le chariot arrive à une des extrémités d'un des filets, il passe automatiquement, par continuité entre les deux filets, de son sens de son mouvement en sens aller à son mouvement en sens retour. Cette disposition fait que la course du chariot, et donc de l'outil de découpe entre ces deux points de retournement, c'est-à-dire entre ces deux points d'inversion du sens du mouvement, est fixe, toujours la même.

Or, il apparaît qu'il existe un besoin notamment, dans le cadre des dispositifs et appareils à usage domestique, qu'un tel dispositif ou appareil ne soit pas adapté uniquement à un seul type de fruit ou légume, ni encore moins à une seule taille de fruit ou légume. Or, du fait de la course fixe du chariot, le dispositif du document CN206777199-U présente l'inconvénient que, s'il est utilisé pour éplucher un ananas de petite taille, sensiblement inférieure à la taille maximale d'ananas pour laquelle l'appareil est conçu, une partie importante de la course du mouvement d'aller-retour du chariot est inutile, au sens qu'elle ne correspond pas à un travail d'épluchage du fruit. Cette course inutile se traduit par un temps d'opération inutile pendant lequel aucun travail d'épluchage n'est effectué. Or, cette course inutile ne peut en aucune manière être réduite. De manière générale, le fait que la course du chariot, et donc de l'outil de découpe, soit fixe, ne permet pas non plus de faire en sorte que la découpe hélicoïdale soit opérée sur une portion préférentielle de la hauteur du fruit ou légume. Cette course fixe résulte du fait que les extrémités de la course, à savoir les points d'inversion du sens de mouvement du chariot, sont déterminés de manière fixe et non modifiable par la géométrie des filets aller et retour de la vis entraînement.

L'invention a donc pour but de proposer un dispositif et un appareil dans lequel au moins un point d'inversion du sens de mouvement du chariot puisse être déplacé selon la direction de déplacement en translation, pour éviter ou limiter une course inutile du chariot, et donc de l'outil de découpe.

### Exposé de l'invention

Dans ce but, l'invention propose un dispositif de préparation culinaire pour pratiquer une découpe hélicoïdale sur un fruit ou un légume, dans lequel :
- le dispositif comporte un support qui est fixe lors du fonctionnement du dispositif;
- le dispositif comporte un entraîneur principal configuré pour porter le fruit ou légume et pour entraîner le fruit ou légume en rotation autour d'un axe principal par rapport au support ;
- le dispositif comporte un outil de découpe qui est porté par un chariot ;
- le chariot est entraîné en translation par rapport au support, suivant un mouvement alternatif de sens aller et de sens retour selon une direction de translation de chariot qui est parallèle à l'axe principal, par une vis d'entraînement à double hélice qui présente un axe de vis parallèle à l'axe principal ;
- la vis d'entraînement est rotative par rapport au support, autour de son axe de vis ;
- la vis d'entraînement comprend un filet aller et un filet retour ;
- le chariot coopère avec le filet aller de la vis d'entraînement pour causer une translation en sens aller du chariot selon la direction de translation de chariot, et avec le filet retour de la vis d'entraînement pour causer une translation en sens retour selon la direction de translation de chariot.

Le dispositif est caractérisé en ce qu'il comporte un commutateur mécanique qui présente au moins un état aller et un état retour pour déterminer le sens aller ou le sens retour du mouvement alternatif du chariot pour un même sens donné de rotation de la vis d'entraînement.

Un tel dispositif peut présenter l'une ou l'autre des caractéristiques optionnelles suivantes.

Dans certains modes de réalisation, dans son état aller, le commutateur mécanique assure que le chariot coopère avec le filet aller de la vis d'entraînement, tandis que dans son état retour, le commutateur mécanique assure que le chariot coopère avec le filet retour de la vis d'entraînement.

Dans certains modes de réalisation, le commutateur mécanique présente un état intermédiaire de débrayage dans lequel le chariot ne coopère ni avec le filet aller ni avec le filet retour de la vis d'entraînement, de sorte qu'une rotation de la vis d'entraînement ne provoque pas de translation du chariot selon la direction de translation de chariot.

Dans certains modes de réalisation, le commutateur mécanique est porté par le chariot.

Dans certains modes de réalisation, le commutateur mécanique est basculé de son état aller à son état retour par coopération mécanique avec une première surface de commande de basculement du dispositif.

Dans certains modes de réalisation configurés pour présenter un état intermédiaire de débrayage, le commutateur mécanique est basculé vers son état intermédiaire de débrayage par coopération mécanique avec une surface de commande de débrayage.

Dans certains modes de réalisation, le dispositif permet un basculement manuel du commutateur mécanique vers l'un ou l'autre de son état aller et de son état retour. Dans certaines versions de tels modes de réalisation, le dispositif peut comporter un sélecteur manuel qui permet de basculer manuellement le commutateur mécanique vers l'un ou l'autre de son état aller et de son état retour.

Dans certains modes de réalisation, le commutateur mécanique comporte un filet aller complémentaire qui est de forme complémentaire à celle du filet aller de la vis d'entraînement, et un filet retour complémentaire qui est de forme complémentaire à celle du filet retour de la vis d'entraînement. Dans certaines versions de tels modes de réalisation, le commutateur mécanique, dans son état aller, amène uniquement son filet aller complémentaire en coopération mécanique avec le filet aller de la vis d'entraînement, et, dans son état retour, amène uniquement son filet retour complémentaire en coopération mécanique avec le filet retour de la vis d'entraînement. Dans certaines déclinaisons de telles versions, on peut prévoir que le commutateur mécanique comporte un écrou à double filet comprenant un passage de vis qui est un orifice qui traverse l'écrou à double filet de part en part selon la direction de l'axe de vis mais dont les dimensions transversales sont supérieures à celle de la vis d'entraînement, le passage de vis présentant une paroi latérale divisée en deux parties, les deux parties étant écartées chacune d'un côté de l'axe de vis, l'une des parties étant munie du filet aller complémentaire, complémentaire du filet aller de la vis d'entraînement, et l'autre des parties, à l'opposé de la première par rapport à l'axe de vis, étant munie du filet retour complémentaire, complémentaire du filet retour de la vis d'entraînement, et on peut prévoir que l'écrou à double filet soit mobile perpendiculairement à l'axe de vis entre une position aller correspondant à l'état aller du commutateur mécanique, et une position retour correspondant à l'état retour du commutateur mécanique de telle sorte que, dans l'état aller du commutateur mécanique, seul le filet aller complémentaire appartenant à l'écrou à double filet coopère avec le filet aller de la vis d'entraînement, et, dans l'état retour du commutateur mécanique, seul le filet retour complémentaire appartenant à l'écrou à double filet coopère avec le filet retour de la vis d'entraînement. Dans certaines de telles déclinaisons, le basculement du commutateur mécanique est obtenu en basculant l'écrou à double filet par une première surface de commande de basculement ou par une surface de commande de débrayage, avec alors la possibilité de prévoir que le basculement de l'écrou à double filet par une première surface de commande de basculement ou par une surface de commande de débrayage soit effectué par l'intermédiaire de moyens élastiques.

Dans certaines des déclinaisons évoquées ci-dessus où le commutateur mécanique, dans son état aller, amène uniquement son filet aller complémentaire en coopération mécanique avec le filet aller de la vis d'entraînement, et, dans son état retour, amène uniquement son filet retour complémentaire en coopération mécanique avec le filet retour de la vis d'entraînement, et dans leurs déclinaisons évoquées ci-dessus, on peut prévoir que le commutateur mécanique comporte un corps principal qui est mobile perpendiculairement à l'axe de vis entre une position aller correspondant à l'état aller du commutateur mécanique, et une position retour correspondant à l'état retour du commutateur mécanique, et on peut prévoir que le filet aller complémentaire et le filet retour complémentaire appartenant au commutateur mécanique soient montés mobiles sur le corps principal avec interposition de moyens élastiques perpendiculairement à l'axe de vis de telle sorte que, dans l'état aller du commutateur mécanique, le filet aller complémentaire appartenant au commutateur mécanique est en appui sur la vis d'entraînement perpendiculairement à l'axe de vis, et, dans l'état retour du commutateur mécanique, le filet retour complémentaire appartenant au commutateur mécanique est en appui sur la vis d'entraînement perpendiculairement à l'axe de vis. Le corps principal du commutateur mécanique peut alors être monté pivotant sur le chariot, autour d'un axe parallèle à l'axe de vis mais distinct de l'axe de vis, entre sa position aller et sa position retour.

Dans certaines déclinaisons évoquées ci-dessus dans lesquelles le basculement du commutateur mécanique est obtenu en basculant l'écrou à double filet par une première surface de commande de basculement ou par une surface de commande de débrayage, notamment celles où le basculement est effectué par l'intermédiaire de moyens élastiques, on peut par ailleurs prévoir que le corps principal du commutateur mécanique soit un porte-écrou, et on peut prévoir que l'écrou à double filet, qui comprend le filet aller complémentaire et le filet retour complémentaire appartenant au commutateur mécanique, soit monté sur le porte-écrou avec interposition de moyens élastiques perpendiculairement à l'axe de vis.

Dans certaines déclinaisons évoquées ci-dessus dans lesquelles le basculement du commutateur mécanique est obtenu en basculant l'écrou à double filet par une première surface de commande de basculement ou par une surface de commande de débrayage, par l'intermédiaire de moyens élastiques, on peut par ailleurs prévoir que l'écrou à double filet comporte des palpeurs de basculement présentant une élasticité par rapport à l'écrou à double filet.

Dans certains modes de réalisation, le support comporte une colonne creuse qui est cylindrique, qui s'étend selon l'axe de vis autour de l'axe de vis et qui présente un profil transversal fermé, à l'exception de la présence d'une fente axiale qui s'étend parallèlement à l'axe de vis selon une dimension axiale au moins égale à la course maximale du chariot, la vis d'entraînement étant contenue dans la colonne creuse du support, et le chariot comprenant une portion interne, contenue à l'intérieur de la colonne creuse, une portion externe, agencée à l'extérieur de la colonne creuse, et une portion de liaison qui lie la portion interne et la portion externe et qui circule dans la fente axiale de la colonne creuse au cours du mouvement alternatif de sens aller et de sens retour du chariot. Dans certaines versions de tels modes de réalisation, le sélecteur manuel est agencé à l'extérieur de la colonne creuse et coopère avec le commutateur mécanique au travers de la fente axiale de la colonne creuse. Dans certaines déclinations de telles versions, le sélecteur manuel présente une dimension axiale au moins égale à celle de la fente axiale, le sélecteur manuel est fixe par rapport au support selon la direction de la fente axiale, et le sélecteur manuel coopère avec le commutateur mécanique par une glissière orientée selon la direction de l'axe principal. Dans certaines de telles déclinations, le sélecteur manuel occulte la fente axiale.

Dans certains modes de réalisation dans lesquels le commutateur mécanique est basculé de son état aller à son état retour par coopération mécanique avec une première surface de commande de basculement du dispositif, la position de la première surface de commande de basculement par rapport au support, selon la direction de translation de chariot, est fixe lors du fonctionnement mais est réglable.

Dans certains modes de réalisation, le commutateur mécanique est basculé de son état retour à son état aller par une deuxième surface de commande de basculement du dispositif. La position de la deuxième surface de commande de basculement, selon la direction de translation de chariot, et par rapport au support, peut alors être fixe lors du fonctionnement mais être réglable.

Dans certains modes de réalisation, le dispositif comporte une contre-pointe qui est agencée selon l'axe principal et qui est prévue pour venir en contact avec le fruit ou légume pour stabiliser la rotation du fruit ou légume autour de l'axe principal ; la contre-pointe est mobile axialement par rapport au support entre une position reculée et une position de maintien du fruit ou légume ; et la contre-pointe est munie de moyens d'accouplement débrayable avec le chariot de telle sorte que, dans un premier trajet aller ou retour, le chariot entraîne avec lui la contre-pointe depuis sa position reculée vers sa position de maintien du fruit ou légume, et en ce que, au-delà de cette position, les moyens d'accouplement débrayable se découplent pour permettre la poursuite du mouvement de sens aller ou de sens retour du chariot. La présence d'une telle contre-pointe peut être envisagée indépendamment de la présence du commutateur mécanique. Dans certaines versions de tels modes de réalisation, les moyens d'accouplement débrayable se découplent automatiquement sous l'effort généré par la poursuite du mouvement de sens aller ou de sens retour du chariot lorsque la contre-pointe atteint sa position de maintien du fruit ou légume. Dans certaines versions de tels modes de réalisation, y compris certaines de celles dans lesquelles les moyens d'accouplement débrayable se découplent automatiquement se découplent automatiquement, les moyens d'accouplement débrayable comportent un aimant.

Dans certains modes de réalisation, le filet aller de la vis d'entraînement et le filet retour de la vis d'entraînement présentent une longueur de pas différente.

L'invention concerne aussi un appareil motorisé comprenant un dispositif ayant l'une quelconque des caractéristiques précédentes, dans lequel l'appareil motorisé comporte une base motorisée ayant un socle comprenant un moteur d'entraînement, le dispositif étant fixé sur le socle de la base motorisée, le moteur d'entraînement assurant l'entraînement en rotation de la vis d'entraînement par rapport au support, autour de son axe de vis.

Dans certains modes de réalisation d'un tel appareil, le dispositif est un dispositif amovible qui est fixé de manière amovible sur le socle de la base motorisée de l'appareil.

Dans certains de tels modes de réalisation dans lesquels le dispositif est un dispositif amovible, le socle de la base motorisée comporte une griffe de fixation du dispositif et un coupleur entraîné en rotation par le moteur d'entraînement, et :
- le support du dispositif amovible comporte une griffe de fixation qui est complémentaire de la griffe de fixation du socle pour assurer la fixation amovible du dispositif amovible sur le socle de la base motorisée ;
- le dispositif amovible comporte un autre coupleur qui est complémentaire du coupleur du socle et qui est lié en rotation d'une part avec l'entraîneur principal et d'autre part avec la vis d'entraînement, le coupleur du socle et l'autre coupleur du dispositif amovible étant accouplés en rotation lorsque le dispositif amovible est fixé sur le socle.

### Brève description des dessins

[Fig. 1] La figure 1 est une vue en perspective d'un premier exemple de réalisation d'un appareil comprenant un dispositif de préparation culinaire pour pratiquer une découpe hélicoïdale sur un fruit ou un légume selon l'invention, amovible.
[Fig. 2] La figure 2 est une vue en perspective et en coupe, selon un plan contenant l'axe principal et l'axe de vis, du dispositif de la figure 1.
[Fig. 3] La figure 3 est une vue éclatée, en perspective, de différents composants du dispositif des figures 1 et 2.
[Fig. 4] La figure 4 est une vue en perspective, de l'avant, d'un chariot du dispositif des figures 1 à 3, équipé du commutateur mécanique.
[Fig. 5] La figure 5 est une vue en perspective, de l'avant, et en coupe selon un plan perpendiculaire à l'axe de vis, du chariot du dispositif des figures 1 à 3, équipé du commutateur mécanique, montrant aussi le sélecteur manuel pour provoquer le basculement manuel du commutateur mécanique.
[Fig. 6] La figure 6 est une vue est une vue en perspective, de l'arrière, montrant le commutateur mécanique et le sélecteur manuel pour provoquer son basculement manuel.
[Fig. 7] La figure 7 est une vue est une vue en perspective, de l'arrière, et en coupe selon un plan perpendiculaire à l'axe de vis, montrant le commutateur mécanique et le sélecteur manuel pour provoquer son basculement manuel.
[Fig. 8] La figure 8 est une vue de l'écrou à double filet, en perspective et en coupe selon un plan contenant l'axe principal et l'axe de vis, du dispositif des figures 1 à 7.
[Fig. 9] La figure 9 est une vue en perspective, de l'avant, et en contre-plongée, du chariot du dispositif des figures 1 à 8, équipé du commutateur mécanique, montrant aussi la première surface de commande de basculement pour provoquer le basculement automatique du commutateur mécanique vers son état retour.
[Fig. 10] La figure 10 est une vue en perspective, de l'avant, du chariot et de la colonne du dispositif des figures 1 à 9, montrant aussi la surface de commande de débrayage pour provoquer le basculement automatique du commutateur mécanique dans son état de débrayage.
[Fig. 11] La figure 11 est une vue schématique sous la forme de différentes vignettes qui illustrent chacune un état du commutateur mécanique du dispositif selon les figures 1 à 10, en fonction des différentes postions et sens de déplacement du porte-écrou et de l'écrou à double filet.
[Fig. 12] La figure 12 est une vue schématique sous la forme de différentes vignettes qui illustrent chacune une configuration du dispositif selon les figures 1 à 10, en fonction des différentes postions et sens de déplacement de la contre-pointe, du chariot et de l'outil de découpe.
[Fig. 13] La figure 13 est une vue en perspective d'un deuxième exemple de réalisation d'un dispositif de préparation culinaire pour pratiquer une découpe hélicoïdale sur un fruit ou un légume selon l'invention.
[Fig. 14] La figure 14 est une vue éclatée, en perspective, de différents composants du dispositif de la figure 13.
[Fig. 15] La figure 15 est une vue est une vue en perspective, de l'avant, montrant le commutateur mécanique du dispositif des figures 13 et 14.
[Fig. 16] La figure 16 est une vue en coupe selon un plan contenant l'axe de vis, montrant, assemblés sur la colonne et autour de la vis d'entraînement, le chariot, le commutateur mécanique, et les surfaces de commande de basculement du dispositif des figures 13 à 15, le commutateur mécanique étant dans un état aller.
[Fig. 17] La figure 17 est une vue en coupe des éléments de la figure 16, selon plan coupe XVII- XVII indiqué à la figure 16, le commutateur mécanique étant dans un état aller.
[Fig. 18] La figure 18 est une vue analogue à celle de la figure 16, le commutateur mécanique étant dans un état retour.
[Fig. 19] La figure 19 est une vue en coupe des éléments de la figure 18, selon plan coupe XIX- XIX indiqué à la figure 18, le commutateur mécanique étant dans son état retour.

### Description de certains modes de réalisation

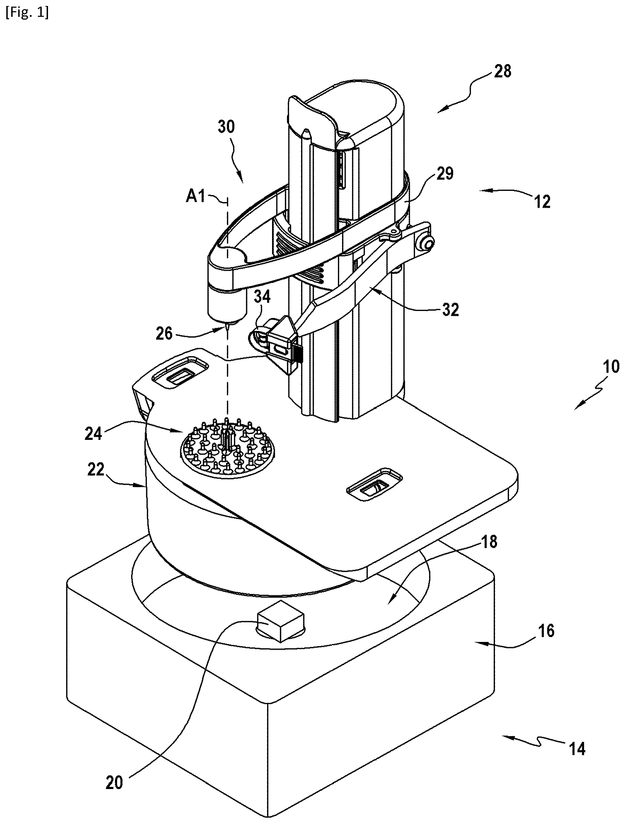

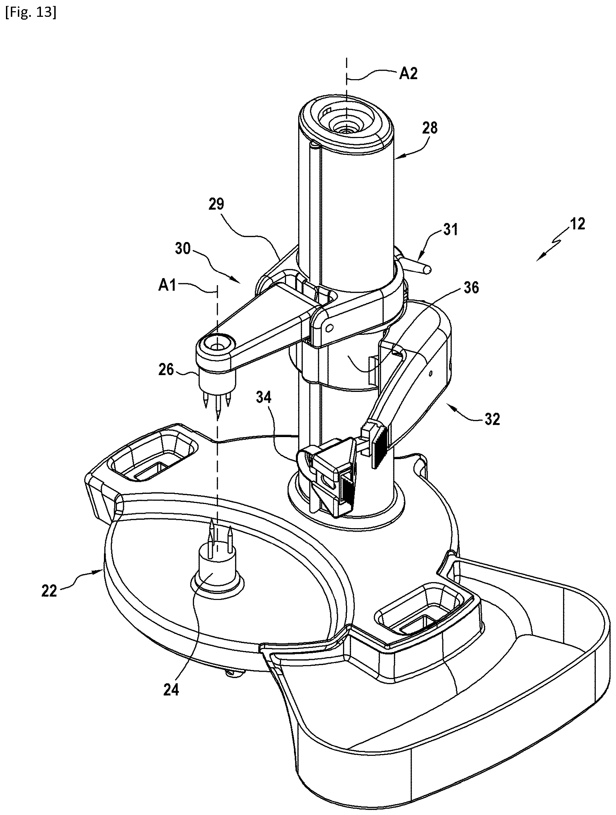

On a représenté sur les figures 1 à 12 un premier mode de réalisation d'un appareil motorisé 10 comprenant un dispositif 12 de préparation culinaire pour pratiquer une découpe hélicoïdale sur un fruit ou un légume. Un deuxième mode de réalisation d'un dispositif 12 de préparation culinaire pour pratiquer une découpe hélicoïdale sur un fruit ou un légume est illustré plus particulièrement aux figures 13 à 19.

Comme on peut le voir plus particulièrement sur la figure 1, l'appareil motorisé 10 comporte une base motorisée 14 ayant un socle 16 comprenant un moteur d'entraînement (non représenté - ici à l'intérieur du socle 16), par exemple un moteur électrique rotatif. Le dispositif 12 de préparation culinaire pour pratiquer une découpe hélicoïdale sur un fruit ou un légume est fixé sur le socle 16 de la base motorisée 14. Le moteur d'entraînement assure l'entraînement d'un mécanisme du dispositif 12 par lequel celui-ci peut pratiquer une découpe hélicoïdale sur un fruit ou un légume.

Dans certains modes de réalisation, l'appareil motorisé 10 pourra être un appareil monobloc dans lequel le dispositif 12 est intégré de manière inamovible avec la base motorisée 14 au sein de l'appareil motorisé 10.

Dans d'autres modes de réalisation, tels que celui qui est représenté schématiquement sur la figure 1, le dispositif 12 est un dispositif amovible qui est fixé de manière amovible sur le socle 16 de la base motorisée 14 de l'appareil motorisé 10. Dans un tel cas, le socle 16 de la base motorisée 14 peut avantageusement comporter une griffe de fixation 18 du dispositif 12 et un coupleur 20 entraîné en rotation par le moteur d'entraînement. De même, le dispositif 12 peut comporter un support 22 qui peut lui aussi comporter une griffe de fixation (non représentée) qui est complémentaire de la griffe de fixation 18 du socle 16 de la base motorisée 14 pour assurer la fixation amovible du dispositif 12 amovible sur le socle 16 de la base motorisée. Le dispositif 12 amovible peut de plus comporter un coupleur (non représenté) qui est complémentaire du coupleur du socle 16 et qui est lié en rotation avec le mécanisme du dispositif 12 pour en assurer l'entraînement. Les griffes de fixation complémentaires du socle 16 de la base motorisée 14 et du dispositif 12 peuvent prendre différentes formes, par exemple la forme d'un accrochage à baïonnette, la forme d'un ou plusieurs crochets d'accrochage, la forme d'un pas de vis, ou simplement présenter des formes complémentaires d'emboîtement, etc.... De même, les coupleurs complémentaires de la base motorisée 14 et du dispositif 12 peuvent par exemple comporter un carré mâle et un carré femelle complémentaires l'un de l'autre, ou encore tout autre accouplement mécanique permettant de transmettre un couple en rotation. De préférence, les deux coupleurs permettent leur accouplement par simple engagement de formes complémentaires, sans nécessiter d'intervention avec un outil. Dans cet exemple, la griffe de fixation 18 et le coupleur 20 sont clairement séparés l'un de l'autre. Cependant, on pourrait prévoir que ces deux éléments, et les deux fonctions qu'ils assurent, soient réalisés par un même jeu de pièces complémentaires. De manière générale, l'homme du métier dans le domaine des appareils de préparation culinaire sera à même de mettre en œuvre n'importe lequel des moyens de griffe de fixation et de coupleurs bien connus de l'homme du métier domaine pour les appareils comportant un accessoire amovible par rapport à une base motorisée.

Que le dispositif 12 soit amovible ou non par rapport à la base motorisée 14, le support 22 du dispositif 12 est fixe lors du fonctionnement du dispositif 12. Bien entendu, dans le cas d'un appareil intégré, le support 22 du dispositif 12 peut ne former qu'une seule pièce ou qu'un seul ensemble de pièces solidaires avec le socle 16 de la base motorisée 14.

Dans tous les cas, le dispositif 12 comporte un entraîneur principal 24 qui est configuré pour porter le fruit ou légume et pour entraîner le fruit ou légume en rotation autour d'un axe principal A1 par rapport au support 22. Dans les exemples qui vont être décrits, on considérera que l'axe principal A1 est un axe vertical, donc orienté selon la direction de la pesanteur terrestre. Cependant, d'autres orientations sont possibles.

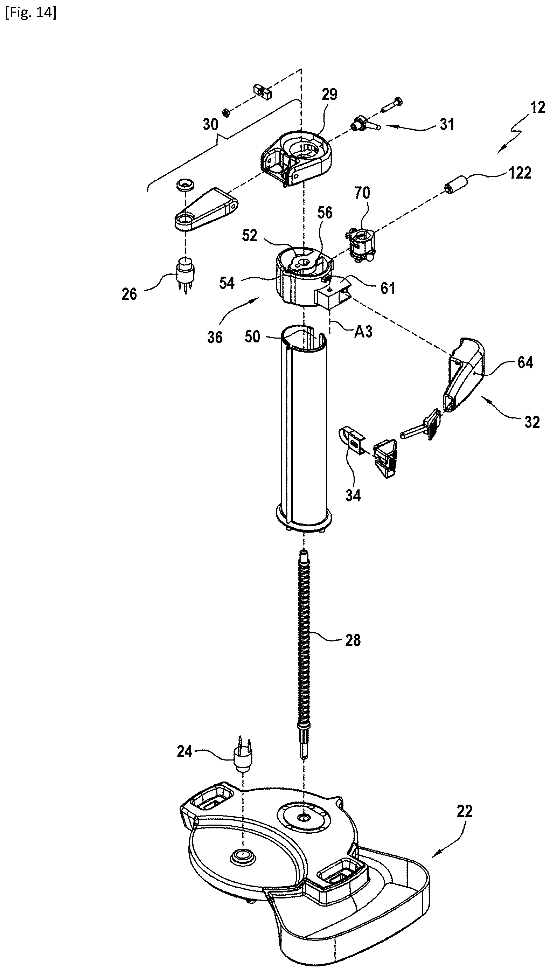

Dans l'exemple illustré sur les figures 1 à 3, l'entraîneur principal 24 présente la forme d'un disque monté à rotation par rapport au support 22 autour de l'axe principal A1. Une face supérieure de l'entraîneur principal 24 présente des picots sur lesquels il est possible de planter le fruit ou légume à travailler de telle sorte que le fruit ou légume est entraîné en rotation autour de l'axe principal A1. Dans l'exemple illustré sur les figures 13 et 14, l'entraîneur principal 24 présente une structure analogue, mais avec un disque de plus petit diamètre et un nombre réduits de picots. Eventuellement, on pourra prévoir un entraîneur principal 24 amovible, le dispositif 12 pouvant alors être par exemple utilisé avec différents types d'entraineur principal, dont la géométrie pourra varier d'un type à l'autre, par exemple pour être optimisée en fonction d'une catégorie particulière de fruit ou légume. Dans un tel cas, l'entraîneur principal pourra être fixé de manière démontable sur le support, par exemple par une fixation magnétique.

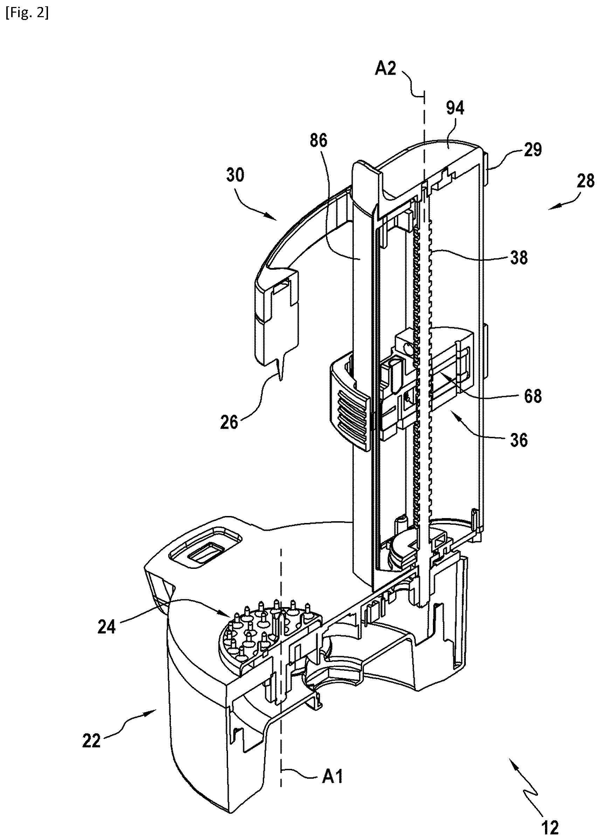

Dans les exemples illustrés, le dispositif 12 est par ailleurs muni d'une contre-pointe 26 qui est agencée sur l'axe principal A1 en regard de l'entraîneur principal 24. La contre-pointe 26 est prévue pour venir en contact avec le fruit ou légume pour stabiliser la rotation du fruit ou légume autour de l'axe principal A1. La contre-pointe 26 présente soit une pointe unique agencée selon l'axe principal A1 (comme illustré notamment à la figure 2), soit plusieurs pointes agencées sur un barillet rotatif autour de l'axe principal A1 (comme illustré notamment à la figure 13). La contre-pointe 26 pourrait être munie de moyens d'entraînement en rotation pour, elle aussi, entraîner en rotation le fruit ou légume à travailler. Cependant, dans les exemples illustrés, la contre-pointe 26 est libre en rotation autour de l'axe principal A1.

Dans la description qui va suivre, on considérera que la contre-pointe 26 est agencée au-dessus de l'entraîneur principal 24. Ainsi, on considérera que l'entraîneur principal 24 reçoit une extrémité inférieure du fruit ou légume à travailler, et que la contre-pointe 26 vient en contact avec une extrémité supérieure du fruit ou légume.

La contre-pointe 26 est de préférence réglable en position selon l'axe principal A1 pour pouvoir adapter l'écart entre l'entraîneur principal 24 et la contre-pointe 26 à la dimension du fruit ou légume à travailler. Dans un tel cas, la contre-pointe 26 est donc mobile axialement par rapport au support 22 entre au moins reculée et une position de maintien du fruit ou légume.

Dans les deux exemples illustrés, le dispositif 12 comporte une colonne 28 qui s'étend verticalement depuis le support 22, en parallèle de l'axe principal A1 mais en étant décalée transversalement par rapport à cet axe principal A1 de manière à laisser libre, au-dessus de l'entraîneur principal 24 un volume de travail dans lequel il est possible de placer le fruit ou légume à travailler. Dans un tel cas, la contre-pointe 26 peut être solidaire d'un bras transversal 30 qui est monté sur la colonne 28 de manière à pouvoir être guidé en translation sur la colonne 28 le long d'un axe parallèle à l'axe principal A1. Le bras transversal 30 de support de la contre-pointe 26 peut ainsi présenter une portion de guidage 29 qui entoure la colonne 28 de manière à assurer le guidage en translation du bras transversal 30.

Eventuellement, on pourra prévoir une contre-pointe 26 amovible, le dispositif 12 pouvant alors être par exemple utilisé avec différents types de contre-pointes, dont la géométrie pourra varier d'un type à l'autre, par exemple pour être optimisée en fonction d'une catégorie particulière de fruit ou légume. Dans un tel cas, la contre-pointe 26 pourra être fixée de manière démontable sur le support, dans l'exemple sur le bras transversal 30, par exemple par une fixation magnétique.

Dans certains modes de réalisation, la position de la contre-pointe 26 le long de l'axe principal A1 est réglable manuellement par l'utilisateur. Dans certains modes de réalisation, notamment celui des figures 1 à 12, la contre-pointe 26 est simplement guidée avec frottement sur la colonne 28 de telle manière que les seuls frottements assurent le maintien en position de la contre-pointe 26 le long de l'axe principal A1. Dans d'autres modes de réalisation, comme on peut le voir sur la figure 14 illustrant le deuxième mode de réalisation, on peut prévoir un mécanisme de serrage manuel 31 que l'utilisateur est amené à desserrer pour permettre le déplacement, en translation selon la direction de l'axe principal A1, de la contre-pointe 26 vers une position désirée, et, une fois cette position désirait atteinte, à serrer pour figer la position de la contre-pointe 26.

Le dispositif 12 comporte un outil de découpe 34, qui assure la découpe hélicoïdale, et qui est porté par un chariot 36, lequel est entraîné en translation par rapport au support 22, suivant un mouvement alternatif de sens aller et de sens retour selon une direction de translation de chariot qui est parallèle à l'axe principal A1. L'outil de découpe 34 est donc déplacé par rapport au support 22 par le chariot 36, et décrit lui aussi un mouvement alternatif de sens aller et de sens retour selon la direction de translation de chariot. C'est ce mouvement de translation, associé à la rotation simultanée du fruit ou légume entraîné par l'entraineur principal 24 qui génère une trajectoire relative, entre l'outil de découpe 34 et le fruit ou légume, qui est hélicoïdale. L'outil de découpe 34 présente une géométrie qui est adaptée au type de découpe hélicoïdale souhaitée. On peut prévoir que le dispositif 12 puisse fonctionner avec différents types d'outils de découpe 34, chaque outil de découpe 34 étant adapté par exemple au type de découpe hélicoïdale à effectuer, et/ou au type de fruit ou légume à travailler. L'outil de découpe 34 peut par exemple être monté de manière amovible à une extrémité libre d'un porte-outil 32 qui est lui-même porté par le chariot 36, l'outil de découpe 34 restant donc dans ce cas monté sur le chariot 36, ici de manière, indirecte, de manière à en suivre le mouvement alternatif de sens aller et de sens retour selon la direction de translation de chariot.

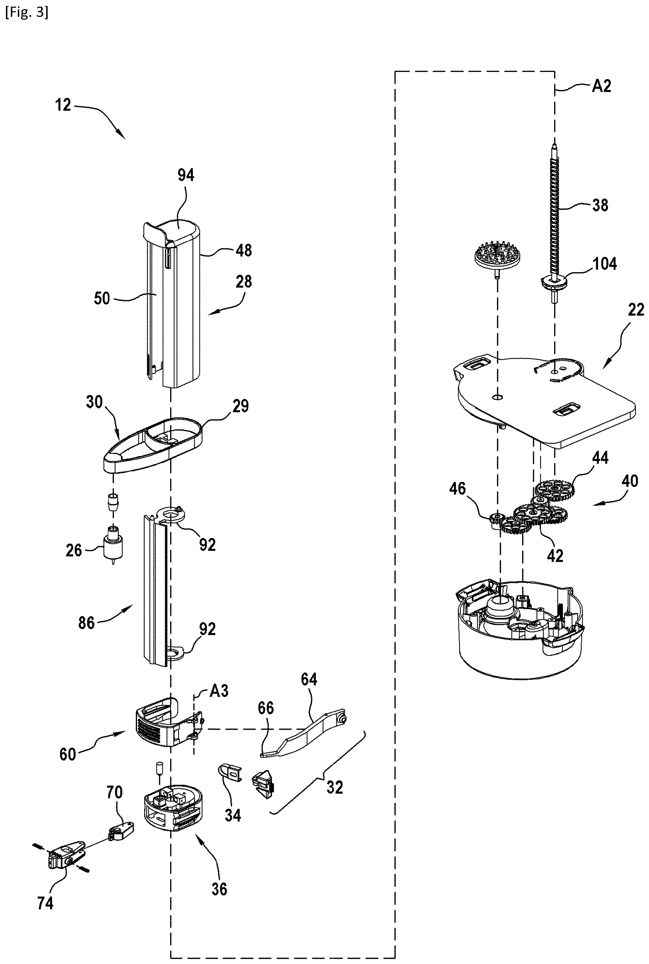

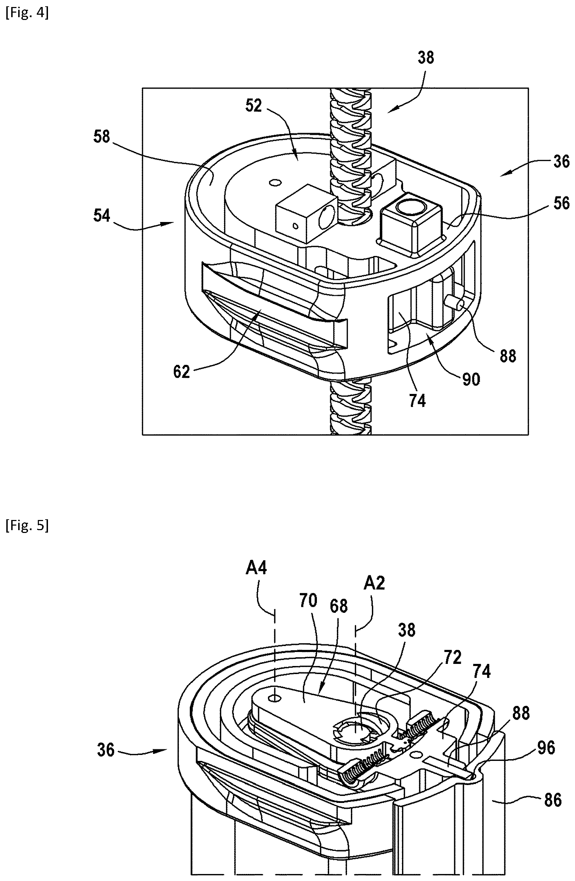

Comme on peut le voir plus particulièrement sur les figures 2 et 3, mais aussi sur la figure 5, ou encore sur les figures 13 à 18 concernant le deuxième mode de réalisation, l'entraînement en translation du chariot 36 est assuré par une vis d'entraînement 38 à double hélice qui présente un axe de vis A2 parallèle à l'axe principal A1.

La vis d'entraînement 38 est rotative par rapport au support 22, autour de son axe de vis A2. Le dispositif 12 et l'appareil motorisé 10 sont conçus pour que le moteur d'entraînement de l'appareil motorisé 10 assure l'entraînement en rotation de la vis d'entraînement 38 par rapport au support 22, autour de son axe de vis A2. Comme on peut le voir plus particulièrement à la figure 3, la vis d'entraînement 38 est entraînée en rotation par exemple par un système d'engrenages 40 qui comporte un engrenage d'entrée 42 entraîné en rotation par le moteur électrique de l'appareil 10. Cet entraînement de l'engrenage d'entrée 42 est par exemple assuré, dans le cadre d'un dispositif 12 amovible, grâce au coupleur du dispositif 12, ce coupleur pouvant par exemple être directement lié à un pignon d'entraînement (non représenté) qui engrène avec l'engrenage d'entrée 42 pour entraîner en rotation le système d'engrenages 40. L'engrenage d'entrée 42 entraîne, par une première cascade de roues d'engrenages, un pignon 44 d'entraînement de la vis d'entraînement 38. Dans l'exemple illustré, le même engrenage d'entrée 42 entraîne, par une deuxième cascade de roues d'engrenages, un pignon 46 d'entraînement en rotation de l'entraîneur principal 24. Avec un tel système, à la fois l'entraîneur principal 24 et la vis d'entraînement 38 sont donc entraînés simultanément en rotation par le biais du même moteur électrique. De préférence, la première cascade de roues d'engrenages et la deuxième cascade de roues d'engrenages du système d'engrenages 40 ne présentent pas la même démultiplication. Par exemple, pour une vitesse donnée du moteur d'entraînement, la vis d'entraînement 38 pourrait présenter une vitesse de rotation, autour de son axe de vis A2, supérieure à la vitesse de rotation de l'entraîneur principal 24 autour de l'axe principal A1. Bien entendu, d'autres systèmes d'entraînement sont possibles.

Ainsi, dans le cadre d'un dispositif 12 amovible par rapport à la base motorisée 14, le coupleur du dispositif 12 est avantageusement lié en rotation, directement ou indirectement, d'une part avec l'entraîneur principal 24 et d'autre part avec la vis d'entraînement 38.

Dans les exemples illustrés, le chariot 36 est guidé en translation selon la direction de l'axe de vis A2 par la colonne 28. La colonne 28 s'étend parallèlement à l'axe de vis A2. Dans les exemples illustrés, la vis d'entraînement 38 est agencée à l'intérieur de la colonne 28, qui est donc dans ces exemples une colonne creuse qui est cylindrique et tubulaire autour de l'axe de vis A2. La colonne 28 présente un profil transversal fermé, à l'exception de la présence d'une fente axiale 50 qui s'étend parallèlement à l'axe de vis A2 selon une dimension axiale au moins égale à la course maximale du chariot 36. On note que le profil transversal de la colonne 28 n'est pas nécessairement circulaire, mais il peut l'être, et que l'axe de vis A2 n'est pas nécessairement un axe de symétrie de la colonne 28, mais il peut en être un. Dans l'exemple, la colonne 28 présente ainsi un corps de colonne 48 qui est tubulaire selon l'axe de vis A2. Le corps de colonne 48 présente une paroi latérale, qui est donc généralement parallèle à l'axe de vis A2, et qui présente une fente axiale 50 qui s'étend sur toute la hauteur du corps de colonne 48. Dans le premier exemple de réalisation, on peut voir plus particulièrement sur les figures 1 à 3 que la fente axiale 50 est agencée sur un côté de la colonne 28 qui sera arbitrairement appelé côté avant et qui est agencé entre l'axe de vis A2 et l'axe principal A1. Toutefois, la fente axiale 50 pourrait être, comme on peut le voir plus particulièrement sur la figure 14 concernant le deuxième mode de réalisation, sur un côté arrière de la colonne 28, opposé à l'axe principal A1 par rapport à l'axe de vis A2, ou encore sur un côté latéral de la colonne 28.

Dans les deux exemples illustrés, le chariot 36 présente, comme on peut le voir plus particulièrement sur les figures 4, 5 et 9, un corps interne 52 et un corps externe 54 qui sont liés l'un l'autre par un pont de liaison 56. Dans le premier exemple de réalisation, le corps interne 52 présente en section transversale, selon un plan perpendiculaire à l'axe de vis A2, une section qui est sensiblement correspondante à la section interne du corps de colonne 48. Dans tous les cas, la section transversale du corps interne 52 est contenue dans la section interne du corps de colonne 48. Dans les deux exemples de réalisation, le corps externe 54 présente une surface interne de guidage 58 qui, en section transversale perpendiculairement à l'axe de vis A2, présente une forme complémentaire d'une surface externe de la paroi latérale du corps de colonne 48. Le pont de liaison 56, qui relie le corps interne 52 au corps externe 54 du chariot 36, est destiné à s'étendre au travers de la fente axiale 50 du corps de colonne 48. On comprend donc que le chariot 36 est susceptible de coulisser longitudinalement selon la direction de l'axe de vis A2 en étant guidé par le corps de colonne 48, ce dernier empêchant toute rotation significative du chariot 36 autour de l'axe de vis A2. Ainsi, de manière plus générale, le chariot 36 comprend une portion interne, ici donc le corps interne 52, qui est contenue à l'intérieur de la colonne 28 creuse, une portion externe, ici le corps externe 54, qui est donc agencée à l'extérieur de la colonne creuse, et une portion de liaison, ici le pont de liaison 56 qui lie la portion interne et la portion externe et qui circule dans la fente axiale 50 de la colonne 28 creuse au cours du mouvement alternatif de sens aller et de sens retour du chariot 36.

Dans le premier exemple de réalisation, le porte-outil 32 comporte plus particulièrement un étrier 60, visible plus particulièrement sur la figure 3, qui présente ici une forme de U dans un plan perpendiculaire à l'axe de vis A2, et qui est destiné à venir s'emboîter, dans l'exemple par l'avant, sur des glissières latérales 62 aménagées sur le corps externe 54 du chariot 36. Le porte-outil 32 comporte de plus un bras 64 de porte-outil qui est fixé, par une extrémité proximale, sur l'étrier 60 avec une possibilité de pivotement autour d'un axe de pivotement de bras A3 qui, dans cet exemple, est parallèle à l'axe de vis A2 est donc aussi parallèle à l'axe principal A1. Dans l'exemple, l'outil de découpe 34 est fixé à l'extrémité distale du bras 64 de porte-outil par un adaptateur 66. Dans le deuxième exemple de réalisation, on peut voir par exemple à la figure 14 que le bras 64 de porte-outil est monté, lui aussi avec possibilité de pivotement autour d'un axe de pivotement de bras A3, directement sur une platine 61 du chariot 36, la platine étant en excroissance transversale sur une face latérale externe du corps externe 54 du chariot 36.

La vis d'entraînement 38 comprend un filet aller et un filet retour qui sont tous les deux hélicoïdaux mais de sens d'enroulement opposés autour de l'axe de vis A2. Ainsi, l'un des filets aller et retour présente un « pas à gauche » tandis que l'autre des filets aller et retour présente un « pas à droite ». Du fait de ces deux sens d'enroulement opposés, pour un même sens de rotation de la vis, un écrou qui coopèrerait avec le filet aller, et qui serait bloqué en rotation autour de l'axe de vis A2, se déplacerait dans un premier sens le long de l'axe de vis A2, tandis qu'un autre écrou qui coopérerait avec le filet retour, et qui serait bloqué en rotation autour de l'axe de vis A2, se déplacerait dans un second sens, opposé au premier sens, le long de l'axe de vis A2. Les notions « aller » et « retour » sont ici arbitraires. Le filet aller et le filet retour s'étendent tous les deux au moins sur la longueur d'un segment commun de la vis d'entraînement 38, la longueur du segment commun étant supérieure ou égale à une course maximale du chariot 36 le long de la vis d'entraînement 38 selon l'axe de vis A2. Par conception, les filets aller et retour de la vis d'entraînement 38 se croisent à intervalle régulier le long de la vis d'entraînement 38. Les filets aller et retour de la vis d'entraînement 38 sont par exemple réalisés sous la forme de rainures hélicoïdales formées en creux par rapport à une surface externe de la vis d'entraînement 38 dont l'enveloppe est un cylindre de révolution autour de l'axe de vis A2.

De manière générale, le chariot 36 coopère avec le filet aller de la vis d'entraînement 38 pour provoquer une translation en sens aller du chariot 36 selon la direction de translation de chariot, à savoir celle de l'axe de vis A2, et avec le filet retour de la vis d'entraînement 38 pour causer une translation en sens retour selon la direction de translation de chariot.

Pour déterminer quel est celui des filets aller et retour de la vis d'entraînement avec lequel coopère le chariot 36, le dispositif comporte un commutateur mécanique 68 qui présente au moins un état aller et un état retour pour déterminer le sens aller ou le sens retour du mouvement alternatif du chariot 36 pour un même sens donné de rotation de la vis d'entraînement. Un tel commutateur mécanique permet de déterminer le sens de translation du chariot 36 selon la direction de translation de chariot 36, et notamment le basculement d'un sens de translation à l'autre, en une position de la vis d'entraînement 38 qui n'est pas nécessairement dictée par la géométrie des filets de la vis d'entraînement 38, et bien entendu sans devoir inverser le sens de rotation du moteur d'entraînement de la vis d'entraînement 38, ce qui permet de se passer d'une interface avec la commande du moteur d'entraînement, au bénéfice d'un coût réduit et de la simplicité de conception.

Dans son état aller, le commutateur mécanique 68 assure que le chariot 36 coopère avec le filet aller de la vis d'entraînement 38. Dans son état retour, le commutateur mécanique 68 assure que le chariot 36 coopère avec le filet retour de la vis d'entraînement 38.

Dans les exemples qui vont être décrits, le commutateur mécanique 68 est porté par le chariot 36 et il comporte un filet aller complémentaire 70a qui est de forme complémentaire du filet aller de la vis d'entraînement 38, et un filet retour complémentaire 70b qui est complémentaire du filet retour de la vis d'entraînement 38.

Dans son état aller, le commutateur mécanique 68, amène uniquement son filet aller complémentaire 70a en coopération mécanique avec le filet aller de la vis d'entraînement 38, le filet retour complémentaire 70b ne coopérant alors pas avec le filet retour de la vis d'entraînement 38. Dans son état retour, le commutateur mécanique 68 amène uniquement son filet retour complémentaire 70b en coopération mécanique avec le filet retour de la vis d'entraînement 38, le filet aller complémentaire 70a ne coopérant alors pas avec le filet aller de la vis d'entraînement 38.

Dans les exemples illustrés, le filet aller et le filet retour de la vis d'entraînement 38, et par voie de conséquence le filet aller complémentaire 70a et le filet retour complémentaire 70b appartenant au commutateur mécanique 68, présentent la même longueur de pas. De la sorte, pour une vitesse donnée du moteur d'entraînement, le chariot 36 se déplace avec la même vitesse dans le sens aller et dans le sens retour. Cependant, on pourrait tout à fait prévoir que le filet aller de la vis d'entraînement et le filet retour de la vis d'entraînement présentent une longueur de pas différente, pour que, pour une vitesse donnée du moteur d'entraînement, le chariot 36 se déplace avec une vitesse différente suivant s'il suit le filet aller ou le filet retour. Dans ce cas, bien sûr, dans la mesure où le commutateur mécanique 68 comporte lui-même un filet aller complémentaire et un filet retour complémentaire, tous les deux complémentaires respectivement des filets aller et retour de la vis d'entraînement 38, ils auront aussi une longueur de pas différente.

Dans les deux exemples illustrés, et comme on peut plus particulièrement référence avec les figures 4 à 9, le commutateur mécanique 68 comporte un écrou à double filet 70, qui comporte donc un passage de vis 72 qui est un orifice qui traverse l'écrou à double filet 70 de part en part selon la direction de l'axe de vis A2 mais dont les dimensions transversales sont supérieures à celle de la vis d'entraînement 38. Le passage de vis 72 présente une paroi latérale concave qui est divisée en deux parties, chacune d'un côté de l'axe de vis A2, l'une des parties étant munie d'un filet aller complémentaire 70a, qui est complémentaire du filet aller de la vis d'entraînement 38, et l'autre des parties, à l'opposé de la première par rapport à l'axe de vis A2, étant munie d'un filet retour complémentaire 70b, qui est complémentaire du filet retour de la vis d'entraînement 38.

Comme on le verra, l'écrou à double filet 70 est mobile perpendiculairement à l'axe de vis A2 entre une position aller correspondant à l'état aller du commutateur mécanique, et une position retour correspondant à l'état retour du commutateur mécanique. Les dimensions transversales du passage de vis 72, et la disposition du filet aller complémentaire 70a et du filet retour complémentaire 70b sur des parties opposées de la paroi latérale du passage de vis 72 sont telles que, dans l'état aller du commutateur mécanique, seul le filet aller complémentaire 70a appartenant à l'écrou à double filet 70 coopère avec le filet aller de la vis d'entraînement 38, et, dans l'état retour du commutateur mécanique 68, seul le filet retour complémentaire 70b appartenant à l'écrou à double filet 70 coopère avec le filet retour de la vis d'entraînement 38. Le filet aller complémentaire 70a et le filet retour complémentaire 70b appartenant à l'écrou à double filet 70 sont par exemple réalisés sous la forme de tronçons de rails hélicoïdaux formés en relief sur la partie correspondante de la paroi latérale concave du passage de vis 72, chaque dite partie correspondante de la paroi latérale concave du passage de vis 72 présentant une enveloppe qui est un secteur angulaire de cylindre de révolution.

Dans les deux modes de réalisation, le basculement du commutateur mécanique 68 est obtenu en basculant directement ou indirectement l'écrou à double filet 70 entre ses différentes positions, par coopération directe ou indirecte de l'écrou à double filet 70 avec une surface de commande de basculement ou avec une surface de commande de débrayage. Cela permet d'avoir un basculement automatique sans avoir à agir sur le sens de rotation de la vis d'entraînement, donc sans avoir à agir sur la commande du moteur, ce qui permet un gain de coût, et/ou l'adaptation du dispositif à une base motorisée ne permettant pas une telle action sur le moteur d'entraînement.

Dans les exemples, les surfaces de commande de basculement ou de débrayage sont des surfaces qui, lors du fonctionnement, c'est-à-dire notamment lorsque le chariot 36 est entraîné en déplacement en translation par la vis d'entraînement 38, ont une position axiale fixe par rapport au support 22 le long de la direction de l'axe de vis A2. On verra cependant que la position axiale, le long de la direction de l'axe de vis A2, de l'une ou l'autre de ces surfaces de commande peut être réglable, en dehors d'une période de fonctionnement du dispositif 12, donc notamment en dehors d'une période lors de laquelle le chariot 36 est entraîné en déplacement en translation par la vis d'entraînement 38, et même, de préférence, en dehors d'une période lors de laquelle la vis d'entraînement 38 est entraînée en en rotation. Une telle possibilité de réglage permet par exemple d'ajuster la course de travail de l'outil de découpe, par exemple en fonction du type ou de la taille du fruit ou légume, ou par exemple encore en fonction de la nature de la découpe que l'on souhaite effectuer. Cela est d'autant plus intéressant que, en conjonction avec la mise en œuvre d'un commutateur mécanique tel que décrit, le réglage de la position axiale de l'une ou l'autre de ces surfaces de commande n'est pas tributaire notamment de la géométrie des filets de la vis d'entraînement. Autrement dit, la position axiale, le long de la direction de l'axe de vis A2, de l'une ou l'autre de ces surfaces de commande peut être réglée en une position intermédiaire quelconque, ou en tous cas pas figée par la conception de la vis d'entraînement 38.

On verra de plus que le basculement de l'écrou à double filet 70 par une surface de commande de basculement ou par une surface de commande de débrayage peut être effectué par l'intermédiaire de moyens élastiques, permettant d'absorber momentanément une impossibilité pour le filet complémentaire appartenant à l'écrou à double filet 70 de coopérer avec le filet correspondant de la vis d'entraînement 38, notamment par exemple en raison d'une situation de « dent contre dent ».

On notera cependant que la solution d'avoir les deux filets aller et retour du commutateur mécanique sur une même pièce, si elle permet une conception compacte et économique, n'est qu'une des solutions possibles. On pourrait prévoir que le commutateur ait deux « écrous » à simple filet, chacun avec un passage de vis dont les dimensions transversales sont supérieures à celle de la vis d'entraînement 38, et chaque passage de vis portant respectivement pour l'un le filet aller complémentaire et pour l'autre le filet retour complémentaire, appartenant au commutateur mécanique. Dans une telle version (non représentée), chaque écrou serait mobile perpendiculairement à l'axe de vis A2 et les deux écrous pourraient être commandés séparément chacun par une surface de commande.

Dans le premier exemple de réalisation, et comme on peut le voir plus particulièrement sur les figures 4 à 9, l'écrou à double filet 70 est monté mobile dans un porte-écrou 74 du commutateur mécanique 68. On verra que la conception en deux pièces du commutateur mécanique avec un écrou à double filet 70 mobile dans un porte-écrou 74 est une première conception qui permet de basculer le commutateur mécanique 68 dans l'un ou l'autre de ses états aller et retour, même si les filets complémentaires appartenant à l'écrou à double filet 70 ne se situent pas, pour une position donnée, exactement en regard de manière complémentaire avec le filet correspondant de la vis d'entraînement 38. Cependant, comme on le verra plus loin en relation avec le deuxième mode de réalisation, le commutateur mécanique 68 peut aussi être réalisé en une seule pièce, ce qui revient, vis-à-vis du premier mode de réalisation, à ce que l'écrou à double filet 70 et le porte-écrou 74 soit fixes l'un par rapport à l'autre.

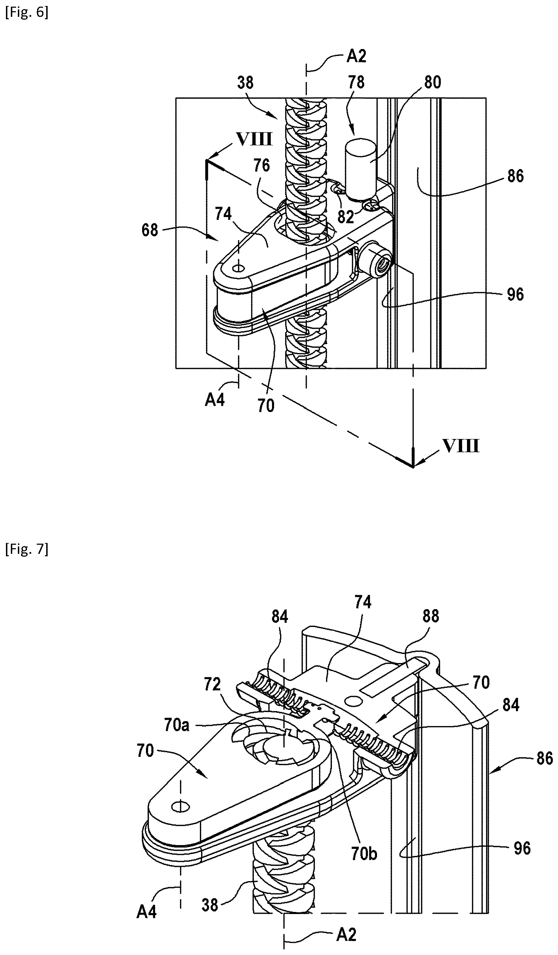

Comme on peut le voir plus particulièrement sur les figures 4 à 9, le porte-écrou 74 est monté mobile sur le corps interne 52 du chariot 36, entre deux positions qui correspondent, pour l'une, la position aller du porte-écrou, à l'état aller du commutateur mécanique 68, et, pour l'autre, la position retour du porte-écrou, à l'état retour du commutateur mécanique 68. Dans l'exemple, le porte-écrou 74 est monté pivotant, dans l'exemple par une extrémité arrière, en rotation autour d'un axe de pivotement A4, sur le corps interne 52 du chariot 36. L'axe de pivotement A4 est parallèle à l'axe de vis A2 mais distinct de l'axe de vis A2. Dans l'exemple illustré sur les figures 4 à 9, le porte-écrou 74 est percé d'un orifice de débattement 76 qui permet le passage, au travers du porte-écrou 74, de la vis d'entraînement 38, de préférence sans contact entre le porte-écrou 74 et la vis d'entraînement 38, pour toute position du porte-écrou 74 allant d'une position aller qui correspond à l'état aller du commutateur mécanique 68, à une position retour qui correspond à l'état retour du commutateur mécanique 68. Comme on le voit plus particulièrement à la figure 6, on peut prévoir des moyens d'indexation 78 qui tendent à maintenir le porte-écrou 74 soit dans sa position aller soit dans sa position retour.

Dans le premier exemple de réalisation, les moyens d'indexation 78 permettent aussi de maintenir le porte-écrou 74 dans une position intermédiaire débrayée dans laquelle, on le verra, le commutateur mécanique 68 est débrayé par rapport à la vis d'entraînement 38.

Dans cet exemple, les moyens d'indexation 78 sont des moyens élastiques qui peuvent par exemple comprendre une bille ou une pointe sollicitée par un moyen élastique 80 tel qu'un ressort, qui sont montés dans le corps interne 52 du chariot 36 de manière à plaquer la bille ou la pointe contre une face du porte-écrou 74 qui est perpendiculaire à l'axe de pivotement A4 du porte-écrou 74 sur le chariot 36. Cette face présente des index en creux 82 pour chacune des positions que l'on souhaite pouvoir maintenir. Par pivotement du porte-écrou 74, lorsque le porte-écrou 74 occupe une de ces positions, un des index en creux 82 correspondant à une des positions se trouve en regard de la pointe ou de la bille des moyens d'indexation 78, permettant donc à la pointe ou à la bille de s'y engager pour maintenir le porte-écrou 74 dans la position correspondant à cet index en creux 82. Toutefois, en cas d'application d'un effort externe sur le porte-écrou 74 visant à forcer son pivotement autour de l'axe de pivotement A4, les moyens d'indexation 78 sont prévus pour permettre la libération du porte-écrou 74 qui peut, sous l'effet d'un tel effort, basculer vers une autre de ses positions.

Dans le premier exemple de réalisation, l'écrou à double filet 70 est lui-même monté mobile par rapport au porte-écrou 74, notamment pour absorber momentanément par exemple une situation de « dent contre dent ». Dans l'exemple illustré, l'écrou à double filet 70 est monté pivotant autour de l'axe de pivotement A4, tant par rapport au porte-écrou 74 que par rapport au chariot 36. On note que, dans cet exemple particulier, l'écrou à double filet 70 et le porte-écrou 74 sont mobiles autour du même axe par rapport au chariot 36, mais cela n'est pas une obligation. La mobilité de l'écrou à double filet 70 par rapport au porte-écrou 74, se fait selon la même direction de déplacement en translation que celle qui existe entre le porte-écrou 74 et la vis d'entraînement 38. Des moyens élastiques sont prévus pour rappeler élastiquement l'écrou à double filet 70 dans une position médiane par rapport au porte-écrou 74, avec possibilité pour l'écrou à double filet 70 de s'écarter transversalement par rapport à la position médiane vers l'une ou l'autre de deux positions d'effacement par rapport au porte-écrou 74. Ici, les moyens élastiques sont réalisés sous la forme de deux ressorts 84 qui sont interposés entre l'écrou à double filet 70 et le porte-écrou 74 et qui agissent, chacun dans un sens, selon une direction perpendiculaire l'axe de vis A2. L'action des deux ressorts 84 s'annule lorsque l'écrou à double filet 70 est dans sa position médiane par rapport au porte-écrou 74.

En résumé, le commutateur mécanique 68 comporte un corps principal, dans l'exemple réalisé sous la forme du porte-écrou 74, qui est mobile perpendiculairement à l'axe principal A1, et donc aussi par rapport à l'axe de vis A2, entre une position aller correspondant à l'état aller, et une position retour correspondant à l'état retour. Par ailleurs, le filet aller complémentaire 70a et le filet retour complémentaire 70b, ici portés par l'écrou à double filet 70, et appartenant donc au commutateur mécanique 68, sont montés mobiles sur le corps principal, ici le porte-écrou 74, avec interposition de moyens élastiques, ici les ressorts 84, perpendiculairement à l'axe principal A1 et perpendiculairement à l'axe de vis A2, de telle sorte que, dans l'état aller du commutateur mécanique 68, le filet aller complémentaire 70a appartenant au commutateur mécanique 68 est en appui sur la vis d'entraînement 38 perpendiculairement à l'axe de vis A2, et, dans l'état retour du commutateur mécanique, le filet retour complémentaire 70b appartenant au commutateur mécanique est en appui sur la vis d'entraînement 38 perpendiculairement à l'axe de vis A2.

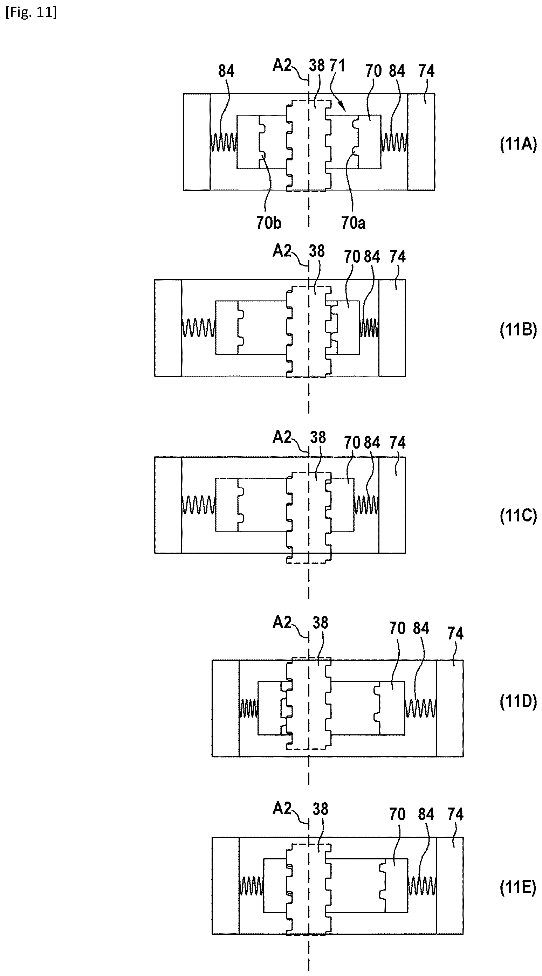

On a illustré sur la figure 11, dans les différentes vignettes (11A), (11B), (11C) (11D) et (11E), différentes configurations possibles pour l'écrou à double filet 70 et pour le porte-écrou 74 en fonction des différents états du commutateur mécanique 68, et en fonction de la possibilité ou pas pour les filets complémentaires de l'écrou à double filet 70 et de la vis d'entraînement 38 d'engrener l'un avec l'autre.

On a d'abord illustré à la figure 11 une configuration (11A) qui correspond à un état intermédiaire optionnel du commutateur mécanique 68. Cet état correspond à une position intermédiaire du porte-écrou 74 entre ses positions aller et retour, et à une position médiane de l'écrou à double filet par rapport au porte-écrou 74, cette position médiane étant définie par les moyens de rappel élastique, par exemple les ressorts 84. Dans cette configuration, aucun des deux filets, parmi le filet aller complémentaire 70a et le filet retour complémentaire 70b appartenant au commutateur mécanique 68, ne coopère avec les filets correspondant de la vis d'entraînement 38. Dans cette configuration (11A), le commutateur mécanique assure un débrayage entre la vis d'entraînement 38 et le chariot 36. La rotation de la vis d'entraînement 38 autour de son axe de vis A2 ne provoque aucun déplacement en translation du chariot 36.

On a ensuite illustré à la figure 11 une configuration (11B) dans laquelle le porte-écrou 74 a été déplacé vers sa position aller. Il y est par exemple maintenu par les moyens d'indexation 78. Dans cette position, les moyens élastiques entre le porte-écrou 74 et l'écrou à double filet 70, ici sous la forme des deux ressorts 84, provoquent la mise en appui de l'écrou à double filet 70 sur la vis d'entraînement 38, selon une direction perpendiculaire à l'axe de vis A2. La configuration (11B) correspond au cas où la position en rotation de la vis d'entraînement 38 autour de son axe de vis A2 et la position axiale de l'écrou à double filet 70 selon ce même axe ne permettent pas aux filets complémentaires de s'emboîter l'un dans l'autre. On se trouve donc dans une situation « dent contre dent ». On remarque que, de ce fait, l'écrou à double filet 70 s'est décalé de sa position médiane par rapport au porte-écrou 74 pour atteindre une de ses positions d'effacement dans laquelle l'écrou à double filet 70 est maintenu plaqué contre la vis d'entraînement 38, tout en étant sollicité fortement par l'un des deux ressorts 84. L'écrou à double filet 70 n'a pas atteint sa propre position aller, mais il est sollicité élastiquement vers cette position aller. Dans cet état, dès que la rotation de la vis d'entraînement autour de son axe de vis A2 permet aux deux filets aller complémentaires de s'emboîter l'un dans l'autre, on atteint la configuration (11C), par simple déplacement de l'écrou à double filet 70 sous l'effet de l'un des deux ressorts 84. Cette configurations (11C), dans laquelle à la fois le porte-écrou 74 et l'écrou à double filet 70 ont atteint leur position aller, correspond à l'état aller du commutateur mécanique 68. Dans cette configuration, qui correspond à l'état aller du commutateur mécanique 68, une rotation de la vis d'entraînement 38 dans le sens prédéfini autour de son axe de vis A2 se traduit par un déplacement en translation du chariot 36 dans le sens aller selon la direction de l'axe de vis A2, notamment une fois que la situation « dent contre dent » a disparu.

Les configurations (11D) et (11E) sont les configurations symétriques des configurations respectivement (11B) et (11C) de l'écrou à double filet 70 et par le porte-écrou 74, mais correspondant à l'état retour du commutateur mécanique 68, d'abord avec l'écrou à double filet 70 en position d'effacement par rapport au porte-écrou 74, dans le cas d'une situation « dent contre dent », puis dans une position d'emboîtement des deux filets retour complémentaires appartenant respectivement à l'écrou à double filet 70 et à la vis d'entraînement 38. La configuration (11E), dans laquelle à la fois le porte-écrou 74 et l'écrou à double filet 70 ont atteint leur position retour, correspond à l'état retour du commutateur mécanique 68. Dans cet état, une rotation de la vis d'entraînement 38 dans le sens prédéfini autour de son axe de vis A2 se traduit par un déplacement en translation du chariot 36 dans le sens retour selon la direction de l'axe de vis A2.

On va maintenant décrire différents moyens qui permettent de basculer le commutateur mécanique vers son état aller vers son état retour, voire vers un état intermédiaire si un tel état intermédiaire est prévu.

Tout d'abord, on décrira des moyens qui permettent d'assurer un basculement manuel du commutateur mécanique 68 vers l'un ou l'autre de son état aller et de son état retour.

Ainsi, le premier exemple de réalisation du dispositif 12 qui est illustré sur les figures 1 à 11 comporte un sélecteur manuel 86 qui permet de basculer manuellement le commutateur mécanique 68 vers l'un ou l'autre de son état aller et de son état retour. Dans l'exemple illustré, le sélecteur manuel 86 est agencé à l'extérieur de la colonne 28 et coopère avec le commutateur mécanique 68 au travers de la fente axiale 50 de la colonne 28. On remarque en effet, plus particulièrement sur la figure 5 et sur la figure 7, que le porte-écrou 74 comporte un pion de liaison 88 qui s'étend selon une direction radiale par rapport à l'axe de pivotement A4 autour duquel le porte-écrou 74 est monté pivotant dans le chariot 36. Le pion de liaison 88 du porte-écrou 74 s'étend transversalement vers l'extérieur du chariot 36 au travers d'une fenêtre avant 90 aménagée dans le chariot 36. On remarque que cette fenêtre avant 90 traverse radialement le pont de liaison 56 qui relie le corps interne à 52 au corps externe 54 du chariot 36. De ce fait, le pion de liaison 88 du porte-écrou 74 traverse, tout comme le pont de liaison 56 du chariot 36, la fente axiale 50 de la colonne 28 creuse. Ainsi, le pion de liaison 88 peut s'étendre radialement en dehors de la colonne 28 creuse pour venir interagir avec le sélecteur manuel 86. Surtout, le pion de liaison 88 permet d'agir, depuis l'extérieur de la colonne 28 creuse, sur le porte-écrou 74 qui, lui, est agencé à l'intérieur de la colonne 28 creuse. Le pion de liaison 88 pourrait donc être en soi un sélecteur manuel, puisqu'il peut facilement être rendu accessible à l'utilisateur. On remarque bien entendu que le pion de liaison est mobile avec le chariot 36 selon la direction axiale.

Toutefois, selon une autre particularité du mode de réalisation des figures 1 à 11, le sélecteur manuel est fixe par rapport au support selon la direction axiale de la fente axiale avant, donc fixe selon la direction de l'axe principal A1 et de l'axe de vis A2, tout en étant mobile selon une direction transversale perpendiculaire à l'un et l'autre de ces deux axes. Dans l'exemple, on peut voir à la figure 3 que le sélecteur manuel 86 comprend des moyens pour assurer son guidage sur le support 22 autour de l'axe de vis A2. En effet, dans l'exemple, le sélecteur manuel 86 se présente sous la forme d'une plaque étendue axialement selon la direction de l'axe de vis A2, sur une longueur correspondant au moins à la course du chariot 36, et correspondant de préférence à la dimension correspondante de la fente axiale 50. On remarque que cette géométrie du sélecteur manuel 86 lui permet par ailleurs d'occulter la fente axiale 50 dans la mesure où il se trouve positionné à l'extérieur de la colonne 28 creuse, juste devant la fente axiale 50. Ainsi, outre un avantage esthétique, l'occultation limite le risque que des débris du fruit ou légume, par exemple des débris d'épluchage, ne pénètrent à l'intérieur de la colonne 28 creuse. Le sélecteur manuel 86 en forme de plaque présente deux anneaux de guidage 92, qui sont agencés respectivement à son extrémité inférieure et son extrémité supérieure selon cette direction axiale de l'axe de vis A2, et qui permettent son guidage en rotation autour de l'axe de vis A2 par rapport à des formes complémentaires aménagées sur le support 22 et dans un capot supérieur 94 qui vient refermer la colonne 28 creuse à son extrémité supérieure. Le sélecteur manuel 86 est ainsi articulé autour de l'axe de vis A2 entre une position aller et une position retour, qui correspondent aux positions aller et retour du porte-écrou 74, et il peut bien entendu occuper toute position intermédiaire, dont une position intermédiaire correspondant à la position intermédiaire de débrayage du porte-écrou 74. Le sélecteur manuel 86 en forme de plaque présente, sur une face arrière tournée vers la colonne 28 creuse, une rainure de liaison 96 qui s'étend axialement selon la direction de l'axe de vis A2, et dans laquelle l'extrémité libre avant du pion de liaison 88 est reçue pour assurer une liaison selon la direction transversale entre le sélecteur manuel 86 et le pion de liaison 88. Le pion de liaison 88 est susceptible de coulisser librement selon la direction axiale de l'axe de vis A2, dans la rainure de liaison 96, sans déplacement correspondant du sélecteur manuel, tout en restant en liaison selon la direction transversale avec le sélecteur manuel 86. En effet, le pion de liaison 88 et la rainure de liaison 96 forment une glissière, orientée selon la direction de l'axe de vis A2, et donc aussi de l'axe principal A1, par laquelle le sélecteur manuel 86 coopère avec le commutateur mécanique 68 quelle que soit la position du chariot 36. Ainsi, quelle que soit la position du chariot 36, et donc du pion de liaison 88, selon la direction de l'axe de vis A2, le pion de liaison 88 reste liée au sélecteur manuel 86, qui lui ne bouge pas selon cette direction axiale. En revanche, quelle que soit cette position du chariot 36 selon la direction de l'axe de vis A2, il est possible de faire basculer, avec le sélecteur manuel 86, la position du porte-écrou 74 vers l'une ou l'autre parmi sa position aller, sa position retour, et sa position intermédiaire. Ainsi, il est possible de faire basculer le commutateur mécanique 68 dans l'un ou l'autre de ses états aller ou retour, ou encore dans son état intermédiaire de débrayage.

La possibilité pour l'utilisateur de provoquer manuellement un basculement du commutateur mécanique 68 lui permet, quelle que soit la position du chariot 36 à un instant donné, de décider de la direction dans laquelle le chariot, et donc l'outil de découpe 34, vont se déplacer.

On note que, pour le cas où le commutateur mécanique 68 est pourvu d'un état intermédiaire de débrayage, l'état débrayé permet éventuellement de donner la faculté à l'utilisateur de régler une position initiale du chariot 36 le long de l'axe de vis A2, pour éviter une course morte initiale. Ensuite, à tout moment, l'utilisateur peut décider du sens de déplacement en translation du chariot 36.

Toutefois, dans l'exemple illustré sur les figures 1 à 11, le dispositif est de plus configuré pour permettre que le commutateur mécanique 68 soit basculé automatiquement de son état aller à son état retour par coopération mécanique avec une première surface de commande de basculement du dispositif, donc ici sans intervention de l'utilisateur. Cela permet d'avoir un basculement automatique, commandé mécaniquement, sans avoir à agir sur le sens de rotation de la vis d'entraînement, donc sans avoir à agir sur la commande du moteur, et ceci indépendamment de la géométrie des filets de la vis d'entraînement 38, donc à une position axiale du chariot 36, selon l'axe principal A1, qui n'est pas fixée par la géométrie des filets de la vis d'entraînement 38. L'absence de nécessité d'agir sur la commande du moteur permet d'obtenir une inversion du sens de déplacement en translation du chariot 36, et donc de l'outil de découpe 34, à faible coût, et/ou avec une base motorisée ne permettant pas une telle action sur le moteur d'entraînement. Comme on le verra, il est ainsi possible de provoquer une inversion du sens de la translation de manière purement mécanique, sans nécessité de mettre en œuvre des moyens électriques/électroniques.

On note ici que les notions d'aller et de retour sont arbitraires par rapport au sens de déplacement réel du chariot 36, et donc de l'outil de découpe 34, par rapport au dispositif et notamment par rapport à la base motorisée 14. Dans l'exemple qui va suivre, on prendra la convention, valable pour cet exemple, qu'un trajet aller correspond à un trajet « vers le bas » au cours duquel le chariot 36 et l'outil de découpe 34 se rapprochent du support 22 du dispositif et de la base motorisée 14. A contrario, un trajet retour correspond à un trajet « vers le haut » au cours duquel le chariot 36 et l'outil de découpe 34 s'éloignent du support 22 du dispositif et de la base motorisée 14, en se rapprochant de l'extrémité supérieure libre de la colonne 28.

Dans cette hypothèse, le basculement du commutateur mécanique de son état aller à son état retour se fait lorsque le chariot 36, au cours d'un déplacement en translation vers le bas, atteint une position basse, ceci afin que, à la suite du basculement automatique du commutateur mécanique 68, le chariot 36 entame un trajet retour vers le haut.

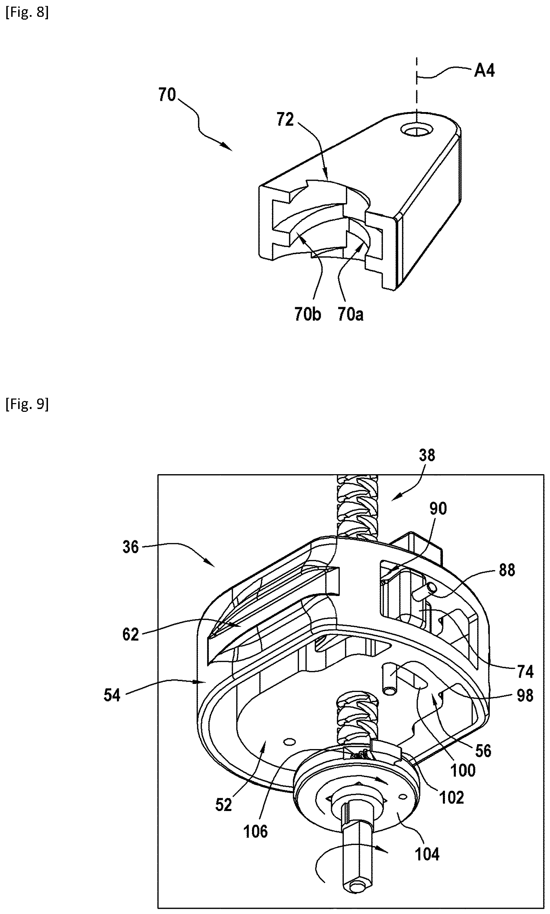

Pour ce faire, on a illustré à la figure 9 la présence d'un pion de basculement 98 qui est solidaire du porte-écrou 74 et qui s'étend, ici vers le bas, au travers d'une lumière 100 aménagée dans le pont de liaison 56 du chariot 36. Le pion de basculement 98 s'étend donc selon une direction parallèle à l'axe de vis A2 et dépasse, dans l'hypothèse, en-dessous d'une surface inférieure du chariot 36. On a par ailleurs illustré à la figure 9 une première surface de commande de basculement qui est ici réalisé sous la forme d'un taquet de basculement 102 qui, dans cet exemple, est lié à la vis d'entraînement 38 de manière à tourner avec celle-ci en rotation autour de l'axe de vis A2. Dans l'hypothèse où ce premier taquet de basculement 102 vise à commander le basculement entre un déplacement aller vers le bas du chariot 36 et un déplacement retour vers le haut du chariot 36, il est avantageux de prévoir que le taquet de basculement 102 soit situé au niveau d'une partie de la vis d'entraînement 38 qui est en dessous du chariot 36. Dans l'exemple illustré, le taquet de basculement 102 est agencé au niveau d'une extrémité inférieure de la vis d'entraînement 38.

Dans l'exemple, le taquet de basculement 102 est formé par une excroissance radiale montée à la périphérie d'un disque 104 qui est agencé à l'extrémité inférieure de la vis d'entraînement 38. Le pion de basculement 98 est agencé sur le porte-écrou 74 à une distance de l'axe de vis A2 qui est supérieure au diamètre du disque 104. En revanche, le taquet de basculement 102 est, dans une position normale, en excroissance radialement vers l'extérieur par rapport à la périphérie du disque 104 d'une distance suffisante pour que, lorsque l'extrémité inférieure du pion de basculement 98 se trouve agencée à la même hauteur que le disque 104, et que la rotation du disque 104 avec la vis d'entraînement 38 amène le taquet de basculement 102 angulairement en correspondance avec le pion de basculement 98, le taquet de basculement entre en contact avec l'extrémité inférieure du pion de basculement 98 et, dans sa rotation autour de l'axe de vis A2, entraîne avec lui le pion de basculement 98, donc entraîne avec lui le porte-écrou 74 en le faisant basculer de sa position aller à sa position retour.

Avantageusement, il est prévu des moyens qui permettent, lorsque le pion de basculement 98 a atteint, avec le porte-écrou 74, la position retour du porte-écrou 74, l'escamotage relatif entre le pion de basculement 98 et le taquet de basculement 102. Dans l'exemple illustré, le taquet de basculement 102 est monté sur le disque 104 de manière mobile et escamotable, ici avec présence d'un ressort de rappel 106 qui exerce une action élastique sur le taquet de basculement 102 pour le forcer vers sa position normale en excroissance radiale. Toutefois, sous effort, le ressort de rappel 106 permet au taquet de basculement 102 de se replier radialement vers l'intérieur par rapport à l'axe de vis A2, par exemple ici dans un logement aménagé dans le disque 104, jusqu'à une position escamotée dans laquelle il n'interfère plus avec le pion de basculement 98. De la sorte, on évite tout blocage de la rotation de la vis d'entraînement 38. Il est à noter que les moyens d'escamotage pourraient être mis en œuvre sous la forme d'une réalisation du pion de basculement 98 et/ou du taquet de basculement 102 en matériaux flexibles. Selon une autre variante, les moyens d'escamotage pourraient résulter d'une géométrie particulière des deux pièces. On note par exemple que, dans le mode de réalisation illustré, le pion de basculement 98 est solidaire du porte-écrou 74 qui est mobile autour de l'axe de pivotement A4, l'axe de pivotement A4 étant parallèle mais distinct de l'axe de vis A2 autour duquel tourne le taquet de basculement. Il s'ensuit que, même en contact l'un avec l'autre, le pion de basculement 98 et le taquet de basculement 102 suivent des trajectoires légèrement différentes. Il est donc possible de concevoir des géométries des pièces en contact qui, en fonction de cette différence de trajectoire, permettent la perte de contact entre les deux pièces lorsque, dans l'exemple, le pion de basculement atteint sa position retour, ce qui revient à un escamotage d'une des deux pièces par rapport à l'autre.

Dans l'exemple illustré, la position de la première surface de basculement, ici la position du premier taquet de basculement 102, selon la direction de translation de chariot 36, c'est-à-dire selon la direction de l'axe de vis A2, est fixe par rapport au support, ici sans possibilité de réglage. En effet, dans cet exemple, il a été choisi de disposer le taquet de basculement 102 pour provoquer un basculement du déplacement du chariot du sens aller, dans l'exemple vers le bas, vers le sens retour, dans l'exemple vers le haut, en un point extrême bas de la course du chariot. Typiquement, ce point extrême bas sera choisi pour correspondre avec la portion la plus basse du fruit ou légume disposé sur l'entraîneur principal 24. Dans un tel cas, on peut en effet considérer que l'utilisateur souhaitera toujours que l'opération de découpe hélicoïdale à pratiquer sur le fruit ou légume soit pratiquée jusqu'à l'extrémité inférieure du fruit ou légume qui est installé sur l'entraîneur principal 24.

Toutefois, dans certains cas, on pourra avantageusement prévoir que la position de la première surface de basculement, par exemple dans l'exemple celle du premier taquet de basculement 102, soit certes fixe lors du fonctionnement, c'est-à-dire lors d'un déplacement du chariot 36 entraîné par la rotation de la vis d'entraînement, mais qu'elle soit réglable, pour pouvoir donner à l'utilisateur la possibilité d'ajuster le point de la course auquel se produit le basculement entre le déplacement de l'outil de découpe 34 dans le sens aller et le déplacement de l'outil de découpe 34 dans le sens retour. Cette possibilité de réglage peut par exemple être mise en œuvre lorsque la vis d'entraînement 38 est à l'arrêt.

Dans ce premier exemple de réalisation, le dispositif 12 comporte une seule surface de commande de basculement pour basculer le commutateur mécanique 68 entre ses états aller et retour. On verra plus loin avec le deuxième exemple de réalisation que le dispositif 12 peut comporter, en plus de la première surface de commande de basculement, une deuxième surface de commande de basculement pour basculer automatiquement le commutateur mécanique 68 en sens inverse, à savoir de son état retour à son état aller. Dans un tel cas, les deux surfaces de commande de basculement sont agencées respectivement aux deux extrémités de la course en translation du chariot 36 le long de la vis d'entraînement 38.

Toutefois, on a vu plus haut que ce premier exemple de réalisation comporte un commutateur mécanique 68 qui, en plus de son état aller et de son état retour, présente aussi un état intermédiaire de débrayage dans lequel il permet de débrayer le chariot 36 par rapport à la vie d'entraînement 38 de telle sorte qu'une rotation de l'avis d'entraînement 38 ne se traduit par aucun déplacement en translation du chariot 36. Cet état intermédiaire peut être mis à profit pour provoquer un arrêt des déplacements du chariot, par exemple après un premier aller-retour.

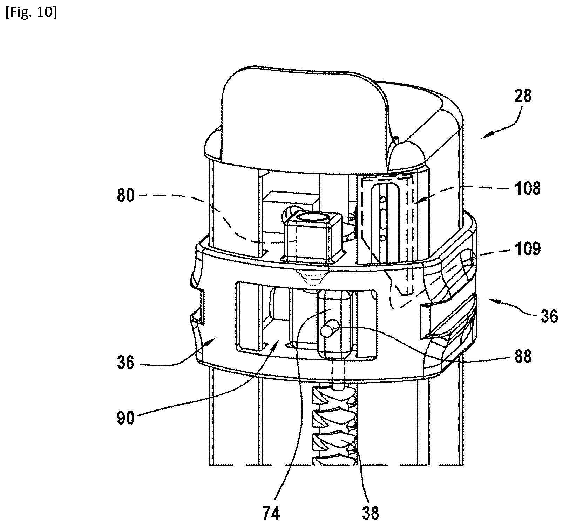

Dans ce premier exemple de réalisation, le dispositif 12 est muni d'une surface de commande de débrayage 108 qui, dans cet exemple, prend la forme d'une came de débrayage, illustrée en traits pointillés à la figure 10. Il est ainsi possible de provoquer un arrêt des déplacements du chariot 36 de manière purement mécanique, sans nécessité de mettre en œuvre des moyens électriques/électroniques. Dans cet exemple, la surface de commande de débrayage 108 occupe une position fixe sur la colonne 28, donc fixe par rapport au support 22, ici à une extrémité supérieure de celle-ci. Dans cet exemple, la surface de commande de débrayage 108 est agencée à l'intérieur de la colonne 28. La surface de commande de débrayage 108 peut être prévue pour commander, lorsque le chariot 36 atteint une position extrême retour, un basculement du commutateur mécanique 68 dans son état intermédiaire de débrayage pour provoquer l'arrêt du déplacement en translation du chariot, même si la vis d'entraînement 38 continu de tourner. Dans l'exemple, la surface de commande de débrayage 108 comporte un pan incliné 109 qui présente un angle d'inclinaison par rapport à la direction axiale la direction de déplacement du chariot 36 est donc que notamment du porte-écrou 74. Ce pan incliné 109 est agencé pour pouvoir venir directement en appui, ici sur le porte-écrou 74, afin de forcer ce dernier vers la position intermédiaire qui correspond à l'état intermédiaire de débrayage du commutateur mécanique 68. On note que, en variante, la surface de commande de débrayage pourrait être agencée à l'extérieur de la colonne, pour par exemple interagir avec le pion de liaison 88 pour basculer le commutateur mécanique 68 dans son état intermédiaire de débrayage.

Ainsi, dans un mode de réalisation qui comporte à la fois un premier taquet de basculement 102 tel que décrit plus haut et une surface de commande de débrayage 108, le dispositif 12 permet que le chariot 36, et donc l'outil de découpe 34 qu'il porte, effectuent de manière automatique un unique aller-retour en partant d'un point de départ, par exemple un point de départ haut, en effectuant un premier déplacement dans le sens aller, par exemple vers le bas, jusqu'à un point de basculement correspondant au premier taquet de basculement 102, à partir duquel le chariot 36 effectue un mouvement de retour jusqu'à un point extrême haut, déterminé par la surface de commande de débrayage 108, où le chariot 36 arrête tout mouvement de translation, sans nécessiter l'arrêt de la rotation de la vis d'entraînement 38. Un tel dispositif permet donc de commander entièrement mécaniquement le basculement du sens aller au sens retour et l'arrêt en position haute, sans avoir à commander le moteur électrique qui peut continuer d'entraîner en rotation la vis d'entraînement 38 pendant toute la séquence.

La surface de commande de débrayage 108 peut être portée par exemple par la colonne 28 et peut par exemple occuper une position fixe par rapport au support 22 du dispositif. Dans un tel cas, la surface de commande de débrayage peut donc être directement fixée sur la colonne de manière non réglable, comme dans le cas de la figure 10. En variante, on pourra avantageusement prévoir que la position de la surface de commande de débrayage soit certes fixe lors du fonctionnement, mais qu'elle soit réglable, pour pouvoir donner à l'utilisateur la possibilité d'ajuster le point de la course auquel se produit l'arrêt du chariot 36 et de l'outil de découpe 34 dans le sens retour. Dans un tel cas d'une surface de commande de débrayage à position réglable, on pourra avantageusement prévoir que la surface de commande de débrayage soit liée à la contre-pointe 26, par exemple en étant portée par le bras transversal 30 de support de la contre-pointe 26, de telle sorte que la mise en place de la contre-pointe 26, qui est prévue pour être plantée dans l'extrémité supérieure du fruit ou légume à travailler, assure aussi la mise en place de la surface de commande de débrayage. Ainsi, on s'assure la surface de commande de débrayage est agencée à une position qui correspond à l'extrémité supérieure du fruit ou légume.

Dans les deux exemples illustrés sur les figures, le chariot 36 et le bras transversal 30 qui porte la contre-pointe 26 sont tous les deux montés sur la même colonne 28. Ils sont tous les deux susceptibles d'être déplacés axialement le long de cette colonne, le déplacement du chariot 36 étant motorisé par l'intermédiaire de la vis d'entraînement 38. Dans les exemples, le chariot 36 et le bras transversal 30 sont guidés en translation sur cette colonne 28, mais de manière indépendante puisque, une fois la contre-pointe 26 mise en place en appui sur l'extrémité supérieure du fruit ou légume à travailler, le bras transversal 30 support de la contre-pointe 26 n'est plus amené à se déplacer pendant l'opération de découpe hélicoïdale qui est conduite par l'outil de découpe 34 portée par le chariot 36, lequel se déplace le long de la colonne 28 pendant cette séquence de travail.

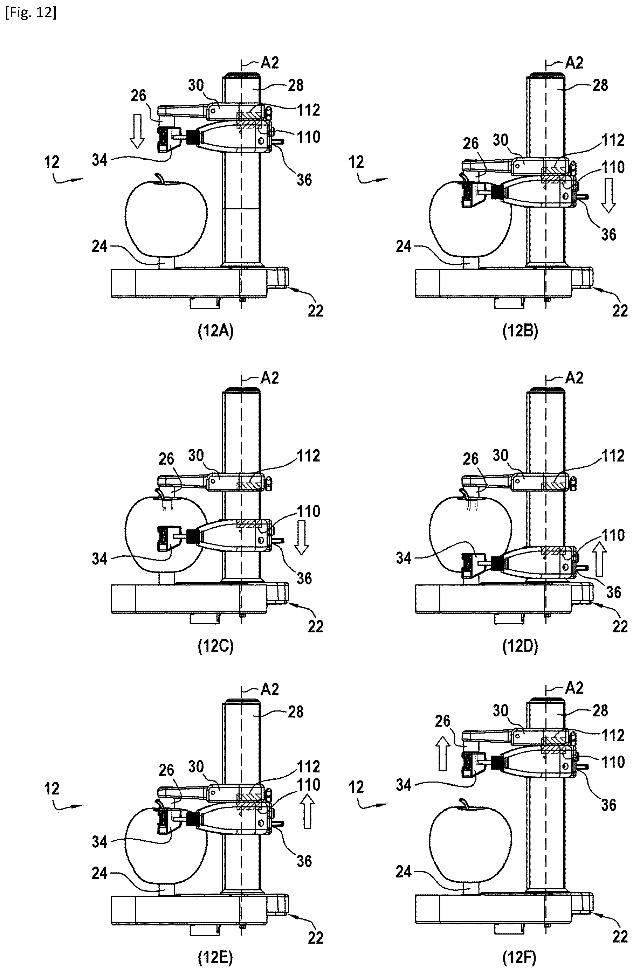

On a illustré sur la figure 12 six étapes principales de fonctionnement d'un dispositif 12 tel que décrit ci-dessus. L'étape illustrée par la vignette (12A) illustre le dispositif 12 dans une position de chargement du fruit ou légume sur le dispositif 12. Dans cette position de chargement, le chariot 36 et le bras transversal 30 support de la contre-pointe 26 sont tous les deux dans une position extrême haute.

L'étape illustrée par la vignette (12B) illustre le dispositif 12 dans une position initiale de travail dans laquelle d'une part la contre-pointe 26 est dans sa position de maintien du fruit ou légume, c'est-à-dire en contact avec l'extrémité supérieure du fruit ou légume à travailler, et le chariot 36 et l'outil de découpe 34 sont dans une position haute de découpe.

Pour passer de la position de chargement à la position initiale de travail, plusieurs solutions sont possibles.

On s'intéresse tout d'abord au passage du chariot 36, et donc de l'outil de découpe 34, de la position de chargement à la position initiale de travail.

Selon une première possibilité, le dispositif 12 est conçu de telle sorte que le commutateur mécanique 68 présente un état intermédiaire de débrayage comme décrit ci-dessus. Dans ce cas, il est possible de laisser à l'opérateur la possibilité de déplacer manuellement le chariot 36 et l'outil de découpe 34 pour l'amener de la position extrême haute à la position initiale de travail.

Selon une deuxième possibilité, il est possible de provoquer le passage du chariot 36 et de l'outil de découpe 34 de la position extrême haute à la position initiale de travail en mettant en route le moteur électrique de l'appareil pour entraîner la vis d'entraînement 38 en rotation, et pour assurer le déplacement vers le bas du chariot 36. Pour cela, le commutateur mécanique 68 aura été basculé vers l'état correspondant à ce sens de déplacement, état qui a été ci-dessus arbitrairement appelé état aller. On notera que le basculement vers l'état aller pourra avoir été provoqué manuellement par l'utilisateur par action sur le sélecteur manuel 86. On verra que dans certains modes de réalisation, tel que celui décrit plus bas, le basculement vers l'état aller peut avoir été provoqué automatiquement par coopération mécanique avec une surface de commande de basculement lorsque le chariot 36 aura été préalablement amené dans une position haute.

Si on s'intéresse maintenant au passage de la contre-pointe 26 de la position de chargement à la position initiale de travail, là encore, différentes variantes sont possibles.

Dans une première variante, le bras transversal 30 qui supporte la contre-pointe 26 peut être amené manuellement par l'utilisateur de la position de chargement à la position initiale de travail, après que le chariot 36 aura atteint sa position initiale de travail.

Selon une seconde variante, la contre-pointe 26 est munie de moyens d'accouplement débrayable avec le chariot 36 de telle sorte que, dans le premier trajet, ici dans une première portion de trajet aller entre la position de chargement et la position initiale de travail, le chariot 36 entraîne avec lui la contre-pointe 26 depuis sa position reculée, ici la position de chargement, vers sa position de maintien du fruit ou légume, et, au-delà de cette position de maintien du fruit ou légume, les moyens d'accouplement débrayable se découplent pour permettre la poursuite du mouvement du chariot 36, ici la poursuite du mouvement aller du chariot 36. En effet, lorsque la contre-pointe arrive au contact du fruit ou légume, son déplacement se trouve bloqué. Dans un tel cas, on pourra avantageusement prévoir que les moyens d'accouplement débrayable se découplent automatiquement sous l'effort généré par la poursuite du mouvement du chariot 36, ici dans le sens aller, lorsque la contre-pointe 26 atteint sa position de maintien du fruit ou légume. L'effort de découplage des moyens d'accouplement débrayable génère un effort de contact de la contre-pointe 26 dans le fruit ou légume, qui permet donc à la contre-pointe 26 de se planter dans le fruit ou légume. On obtient ainsi une mise en place automatique de la contre-pointe 26, avec un réglage automatique de sa position axiale selon la direction de l'axe principal A1.

Différents moyens peuvent être mis en œuvre en tant que moyens d'accouplement débrayable. Ils peuvent être réalisés sous la forme de deux éléments mécaniques de formes complémentaires, respectivement sur le chariot 36 et sur le bras transversal 30 de support de la contre-pointe 26, qui s'emboîtent élastiquement de manière réversible, ou qui s'accrochent l'un l'autre de manière réversible. En variante, les moyens d'accouplement débrayable peuvent comporter au moins un aimant porté par l'un parmi le chariot 36 ou le bras transversal 30 de support de la contre-pointe 26, associé avec, sur l'autre parmi le chariot 36 et le bras transversal 30, soit au moins un aimant correspondant, soit une masse ferreuse. L'avantage d'utiliser un aimant pour réaliser les moyens d'accouplement débrayable est que ces moyens seront moins sujets à usure que des éléments mécaniques de formes complémentaires. Sur la figure 12, on a illustré de manière très schématique le cas où le chariot 36 comporte au moins un aimant 110, de préférence agencé à proximité d'une face supérieure du chariot 36. Le bras transversal 30 de support la contre-pointe 26 présente lui aussi un aimant 112, agencé de préférence à proximité d'une face inférieure d'une portion de guidage du bras transversal 30 qui est en regard de l'aimant 110 du chariot 36. De préférence, on prévoira au moins deux aimants 110 sur le chariot 36, répartis symétriquement de part et d'autre de l'axe de la colonne 28, et deux aimants correspondant sur le bras transversal 30, et aussi répartis symétriquement de part et d'autre de l'axe de la colonne 28 et en regard respectivement des deux aimants du chariot 36. Ceci permet de répartir les efforts exercés par les aimants du chariot 36 sur le bras transversal 30 de manière équilibrée de part et d'autre du guidage, pour limiter les phénomènes de coincements. Bien entendu, on pourra prévoir une multitude d'aimants répartis autour de l'axe de la colonne 28, tant sur le chariot 36 que sur le bras transversal 30, pour encore améliorer l'équilibrage des efforts exercés sur le bras transversal 30 et pour encore limiter les risques de coincements. À l'extrême, on pourrait prévoir d'utiliser des aimants annulaires autour de l'axe de la colonne 28 pour encore améliorer ce point. Bien entendu, les variantes ci-dessus comprenant deux aimants, une multitude d'aimants ou un aimant annulaires sur l'un parmi le chariot 36 ou le bras transversal 30 de support de la contre-pointe 26 peuvent être déclinées avec la présence, sur l'autre l'un parmi le chariot 36 ou le bras transversal 30, de deux masses ferreuses, d'une multitude de masses ferreuses ou d'une masse ferreuse annulaire en regard des dits aimants. En tant qu'aimant, on pourra utiliser notamment un aimant permanent ou un électroaimant.

Par ailleurs, on a vu que, dans les exemples illustrés, le chariot 36 comporte un corps interne 52, qui se déplace à l'intérieur de la paroi latérale de la colonne 28 et un corps externe 54 qui se déplace à l'extérieur de la paroi latérale de la colonne 28. La portion de guidage du bras transversal 30 sur la colonne 28 peut comporter seulement un corps externe entourant la paroi latérale de la colonne 28 par l'extérieur, ou peut aussi comporter un corps interne, de manière similaire à ce qui a été vu pour le chariot 36. Les moyens d'accouplement débrayable seront de préférence de manière identique à la fois sur le chariot 36 et sur le bras transversal 30, par exemple sur les corps externes respectifs et/ou sur les corps internes respectifs si le chariot 36 et le bras transversal 30 en sont munis.

À la figure 12, la vignette (12C) montre que, à partir de la position de travail initiale, qui est une position haute dans l'exemple, le chariot 36 et l'outil de découpe 34 continuent leur déplacement dans le sens aller, donc ici vers le bas, jusqu'à atteindre la position basse illustrée à la vignette (12D) dont on verra qu'elle est une position de basculement. Pendant l'étape de la vignette (12C), l'outil de découpe 34 est plaqué en appui contre le fruit ou légume par le porte-outil 32, radialement par rapport à l'axe principal A1, et, du fait de la combinaison du mouvement de rotation imprimé au fruit ou légume par l'entraîneur principal avec le mouvement de translation imprimé par le chariot 36 à l'outil de découpe 34, l'outil de découpe 34 pratique sur le fruit ou légume la découpe hélicoïdale souhaitée.

Dans les deux exemples illustrés sur les figures, le dispositif 12 comporte des moyens pour provoquer le basculement automatique du commutateur mécanique 68 lorsque le chariot 36 a atteint la première position de basculement qui est illustrée en tant que position basse par la vignette (12D). Une fois le basculement automatique du commutateur mécanique 68 opéré, le chariot 36 inverse son sens de déplacement en rotation selon la direction de l'axe principal A1 et de l'axe de vis A2. Dans l'exemple, le chariot 36 entame donc un mouvement vers le haut, jusqu'à atteindre une position haute de travail, qui est par exemple définie par l'arrivée en contact du chariot 36 avec le bras transversal 30 de support de la contre-pointe 26, par exemple avec la portion de guidage du bras transversal 30 sur la colonne 28. La position haute de travail, illustrée à la vignette (12E), peut par exemple être identique à la position de travail initiale illustrée à la vignette (12B). Pendant l'étape de la vignette (12D), l'outil de découpe 34 peut continuer de pratiquer sur le fruit ou légume la découpe hélicoïdale souhaitée.

Eventuellement, lorsque les filets aller et les filets retour ont la même longueur de pas, on peut prévoir que, sur la vis d'entraînement 38 et/ou sur le commutateur mécanique 68, le filet retour présente un décalage axial par rapport au filet aller, par exemple un décalage axial d'une demi longueur de pas, pour que la trajectoire retour relative de l'outil de découpe 34 sur la surface du fruit ou légume soit décalée de la trajectoire aller relative de l'outil de découpe 34 sur la surface du fruit ou légume. Un tel décalage permet, par exemple dans le cas d'un outil éplucheur, de limiter le risque qu'une partie du fruit ou légume ne soit pas épluchée, ce qui pourrait être le cas en cas d'une hauteur de travail de l'outil qui serait inférieure à la longueur de pas de la trajectoire hélicoïdale relative de l'outil de découpe 34 sur la surface du fruit ou légume.

À partir de cette position haute de travail, plusieurs possibilités peuvent être prévues.

On verra plus bas, en référence au second mode de réalisation, qu'il est possible de prévoir, par exemple à cette position haute de travail, que le commutateur mécanique soit basculé de son état retour à son état aller par une deuxième surface de commande de basculement. Dans un tel cas, le chariot 36 reprend son déplacement en translation dans le sens aller, ici vers le bas, tel qu'illustré à la vignette (12C), pour atteindre à nouveau la position basse illustrée par la vignette (12D), et ainsi de suite.

Toutefois, le dispositif 12 qui est illustré sur les figures 1 à 11 est configuré pour effectuer un unique aller-retour. De ce fait, lorsque le chariot 36 atteint sa position haute de travail au niveau de laquelle il arrive en contact avec le bras transversal 30, il continue son déplacement en translation dans le sens retour, ici vers le haut, en entraînant avec lui vers le haut, donc vers sa position reculée, le bras transversal 30 de support de la contre-pointe 26, telle que cela est illustré sur la vignette (12F). Pour cet exemple de dispositif 12 illustré sur les figures 1 à 11, qui est muni d'une surface de commande de débrayage 108, ce mouvement se poursuit jusqu'à ce que le chariot 36 atteigne la position dans laquelle la surface de commande de débrayage 108 agit sur le commutateur mécanique 68 pour l'amener dans son état intermédiaire de débrayage. Dans l'exemple illustré, cette position est la même que la position de chargement illustré à la figure (12A).

Toutefois, on pourrait en variante prévoir que la surface de commande de débrayage 108 soit portée non pas directement par la colonne 28 comme dans l'exemple illustré à la figure 10, mais qu'elle soit portée par le bras transversal 30 de support de la contre-pointe 26, par exemple par la portion de guidage de ce bras transversal 30. Dans ce cas, le basculement du commutateur mécanique 68 dans son état intermédiaire de débrayage se ferait par exemple dès l'atteinte de la position de travail haute tel qu'illustré à la vignette (12E). Dans ce cas, le déplacement du chariot 36 et de l'outil de découpe 34 s'arrêterait automatiquement lors de leur premier retour à cette position haute de travail. Avec une telle disposition, on constate que le déplacement du chariot 36 et de l'outil de découpe 34 s'arrêterait ainsi à une position réglable, le réglage étant obtenu par la position de maintien du fruit ou légume définie par le fruit ou légume pour le bras transversal 30 de support de la contre-pointe 26. Dans une telle hypothèse, l'utilisateur pourrait alors ramener manuellement le chariot 36 et le bras transversal 30 dans la position de chargement illustrée à la vignette (12A).

Ainsi, on note que le premier mode de réalisation, lorsqu'il comporte la surface de commande de débrayage 108 qui arrête le mouvement du chariot après le mouvement de retour, détermine un mouvement alternatif de sens aller et de sens retour du chariot 36 qui comporte une seule alternance, donc un seul aller-retour.

On a illustré sur les figures 13 à 18, un deuxième exemple de réalisation d'un dispositif 12 selon l'invention. Seuls les points notables de différences par rapport au premier mode de réalisation seront ici décrits. Sur les figures, des éléments identiques ou similaires à ceux décrits en relation avec le premier mode de réalisation seront désignés par les mêmes chiffres de référence.

Cet exemple de réalisation diffère du premier essentiellement par un mode de réalisation différent des moyens qui permettent de basculer le commutateur mécanique 68 entre ses états aller et retour. De plus, dans ce deuxième exemple de réalisation, le commutateur mécanique 68 ne présente pas d'état intermédiaire de débrayage.

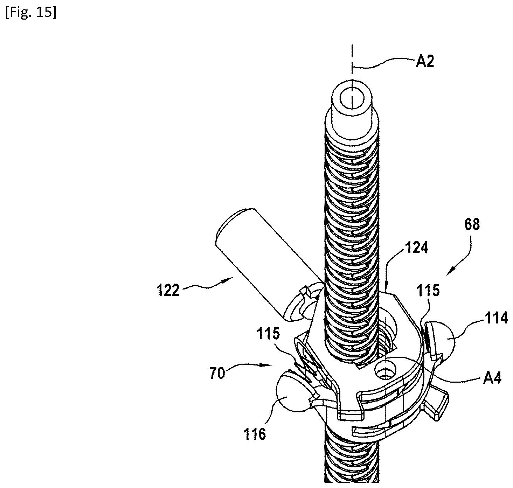

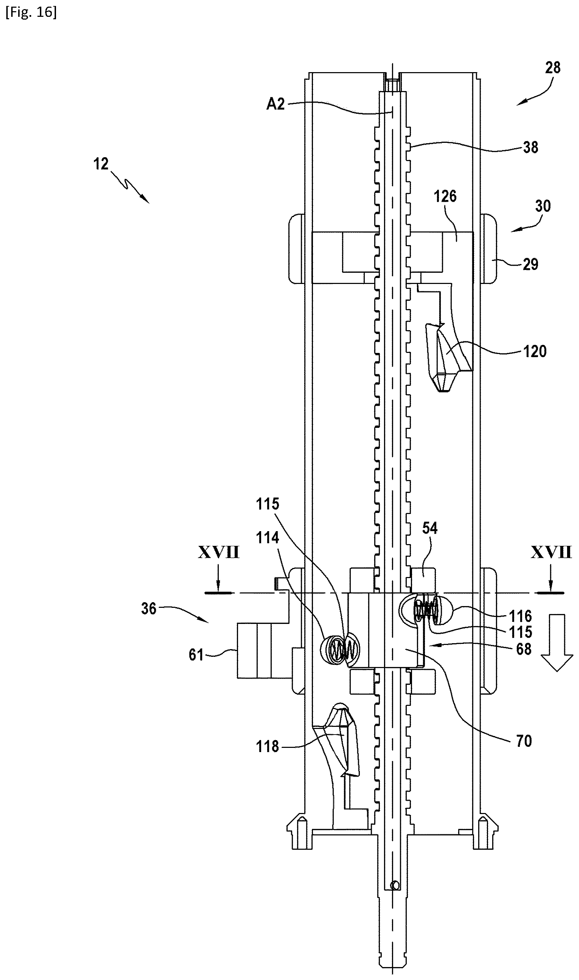

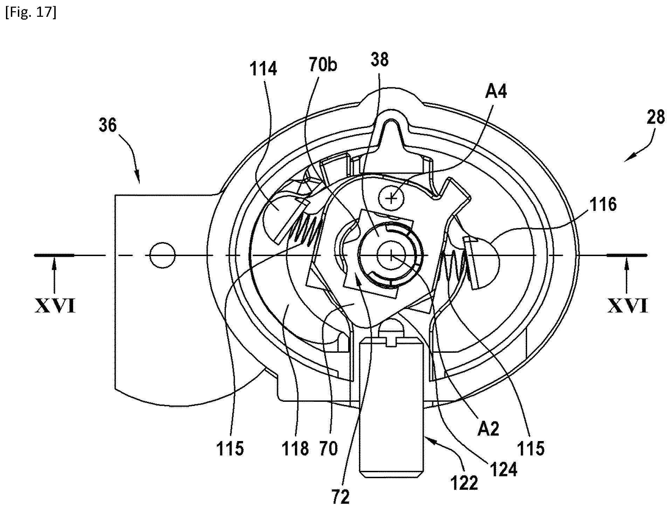

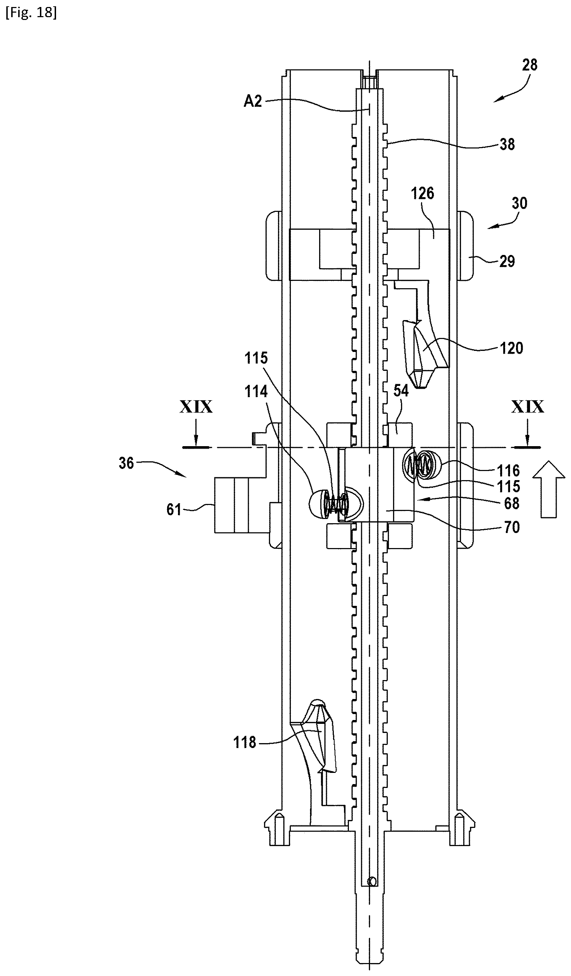

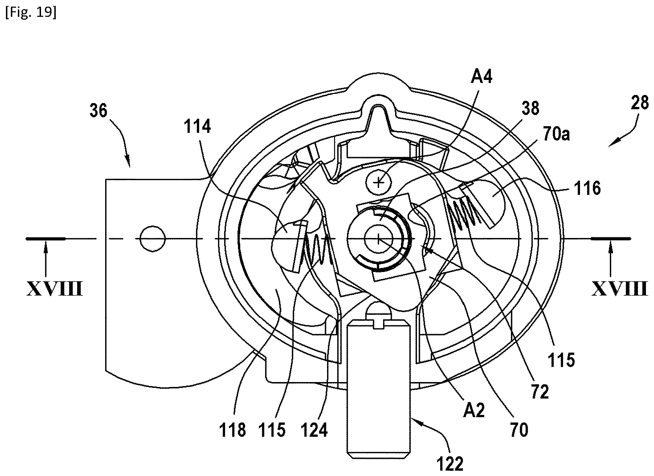

On a illustré sur la figure 15 uniquement la vis d'entraînement 38 et le commutateur mécanique 68. Comme on peut le voir sur les figures 16 et 18, le commutateur mécanique 68 est, comme dans le premier mode de réalisation, porté par le chariot 36, notamment par le corps interne 54 du chariot 36, à l'intérieur de la colonne 28. Le commutateur mécanique 68 comporte, comme dans le premier exemple de réalisation, un écrou à double filet 70 qui est muni d'un premier palpeur de basculement 114 et d'un deuxième palpeur de basculement 116, qui sont respectivement prévus pour coopérer avec une première surface de commande de basculement 118 et une deuxième surface de commande de basculement 120, qui sont ici des surfaces de came. L'écrou à double filet 70 est monté directement sur le chariot 36, avec pivotement autour de l'axe de pivotement A4, parallèle à l'axe de vis A2 mais distinct de celui-ci. Dans ce deuxième exemple, l'écrou à double filet 70 est pivoté de manière bistable autour de l'axe de pivotement A4, soit dans une position aller, illustrée sur les figures 16 et 17, soit dans une position retour, illustrée sur les figures 18 et 19. Le caractère bistable est par exemple assuré par un moyen d'indexation 122 élastique, comprenant une pointe sollicitée par un moyen élastique selon une direction radiale en direction de l'axe de vis A2 en appui radialement contre une surface latérale arrière 124 de l'écrou à double filet 70. La surface latérale arrière 124 présente un profil en V convexe, pointé radialement vers l'arrière par rapport à l'axe de vis A2. Par la configuration du profil en V convexe et par la direction d'effort de la pointe du moyen d'indexation 122 élastique, le moyen d'indexation 122 élastique agit sur l'écrou à double filet 70 de manière à le forcer soit vers sa position aller, soit vers sa position retour, avec possibilité de basculer de l'une à l'autre, en passant par une position intermédiaire instable qui forme un «point dur » instable dans le basculement. La position intermédiaire instable correspond au passage de la pointe du profil en V de la surface latérale arrière 124 au contact de la pointe du moyen d'indexation 122 élastique.

Dans la position aller de l'écrou à double filet 70, celui-ci détermine l'état aller du commutateur mécanique 68. Dans la position retour de l'écrou à double filet 70, celui-ci détermine l'état retour du commutateur mécanique 68.

Chacun du premier palpeur de basculement 114 et du deuxième palpeur de basculement 116 est en excroissance transversalement par rapport à l'écrou à double filet 70. Chacun du premier palpeur de basculement 114 et du deuxième palpeur de basculement 116 est disposé d'un côté d'un plan axial contenant à la fois l'axe de vis A2 et l'axe de pivotement A4 de l'écrou à double filet 70. Chacun du premier palpeur de basculement 114 et du deuxième palpeur de basculement 116 est prévu pour coopérer avec la première surface de commande de basculement 118 ou avec la deuxième surface de commande de basculement 120 correspondante lorsque le chariot 36, par son déplacement axial, amène l'écrou à double filet 70 et donc l'un des premier palpeur de basculement 114 et deuxième palpeur de basculement 116 à hauteur avec la première surface de commande de basculement 118 ou avec la deuxième surface de commande de basculement 120 correspondante. Chacune des première surface de commande de basculement 118 et deuxième surface de commande de basculement 120 correspondante comporte un plan incliné par rapport à une direction axiale parallèle à l'axe de vis A2 qui est agencée de manière à repousser le premier palpeur de basculement 114 ou le deuxième palpeur de basculement 116 correspondant radialement vers l'intérieur, en direction de l'axe de vis A2, ceci afin de provoquer le basculement de l'écrou à double filet 70.

Dans ce deuxième mode de réalisation, il est également prévu, comme dans le premier mode de réalisation, des moyens pour permettre le basculement de l'écrou à double filet 70, y compris dans une situation « dent contre dent ». Pour cela, le premier palpeur de basculement 114 et le deuxième palpeur de basculement 116 présentent une élasticité par rapport à l'écrou à double filet 70. On pourrait prévoir que le premier palpeur de basculement 114 et le deuxième palpeur de basculement 116 soient réalisés en matériaux flexibles, de préférence élastiques. Dans le cas illustré, chacun des premier palpeur de basculement 114 et deuxième palpeur de basculement 116 est agencé à l'extrémité d'un bras qui est articulé autour de l'axe de pivotement A4, parallèle à l'axe de vis A2. Chacun des premier palpeur de basculement 114 et deuxième palpeur de basculement 116 est sollicité élastiquement vers l'extérieur par des moyens élastiques 115 interposés entre l'écrou à double filet 70 et le palpeur de basculement considéré. Chacun des moyens élastiques 115 est ici un ressort de compression, mais on pourrait prévoir un ressort à action angulaire.

Sur les figures 16 et 17, on a illustré la configuration lors d'un déplacement du chariot 36 dans le sens aller selon la direction de l'axe de vis A2. L'écrou à double filet 70 est basculé dans sa position aller, de sorte que son filet aller complémentaire 70a coopère avec le filet aller de la vis d'entraînement 38. Par la position aller, pivotée autour de l'axe de pivotement A4, le premier palpeur de basculement 114 se trouve en contact ou à proximité immédiate de la surface latérale interne de la colonne 28. Par la rotation de la vis d'entraînement 38, l'écrou à double filet 70 se déplace dans le sens aller, ici vers le bas, entraînant avec lui le chariot 36, et donc l'outil de découpe 34. En arrivant vers sa position basse, le palpeur est amené à entrer en contact avec le pan incliné de la première surface de commande de basculement 118 qui est ici aménagée en relief radialement vers l'intérieur à une extrémité inférieure de la surface interne de la paroi latérale de la colonne 28 creuse. L'avancement dans le sens aller, ici vers le bas, de l'écrou à double filet 70 fait que, par l'action de la première surface de commande de basculement 118 sur le premier palpeur de basculement 114, ce dernier provoque le basculement de l'écrou à double filet 70 vers sa position retour. Si, au moment de ce basculement, une situation de « dent contre dent » empêche momentanément le filet retour complémentaire 70b appartenant à l'écrou à double filet 70 de s'engager avec le filet retour de la vis d'entraînement 38, donc empêchant momentanément l'écrou à double filet 70 d'atteindre sa position retour, les moyens élastiques 115 permettent, en se comprimant, d'absorber l'écart de positionnement sans engendrer d'effort trop important entre le premier palpeur de basculement 114 et la première surface de commande de basculement 118 correspondante. Dès que la vis d'entraînement 38 a tourné suffisamment autour de son axe pour permettre au filet retour complémentaire 70b appartenant à l'écrou à double filet 70 de s'engager avec le filet retour de la vis d'entraînement 38, les moyens élastiques 115 forcent l'écrou à double filet 70 dans sa position retour.

Pendant le trajet de déplacement dans le sens aller et pendant l'opération de basculement de l'état aller à l'état retour, le deuxième palpeur de basculement 116 est inopérant.

En revanche, comme on peut le voir sur les figures 18 et 19, lorsque l'écrou à double filet 70 est dans sa position retour, de sorte que son filet retour coopère avec le filet retour de la vis d'entraînement 38, le deuxième palpeur de basculement 116 se trouve en contact ou à proximité immédiate de la surface latérale interne de la colonne 28. Par la rotation de la vis d'entraînement 38, l'écrou à double filet 70 se déplace dans le sens retour, ici vers le haut, entraînant avec lui le chariot 36 et donc l'outil de découpe 34. En arrivant vers sa position haute, le deuxième palpeur de basculement 116 est amené à entrer en contact avec le pan incliné de la deuxième surface de commande de basculement 120 qui est ici aménagée en relief radialement vers l'intérieur par rapport à la surface interne de la paroi latérale de la colonne 28 creuse. Dans l'exemple, la deuxième surface de commande de basculement 120 est portée non pas directement par la colonne 28, mais par un corps interne 126 de la portion de guidage 29 du bras transversal 30 de support de la contre-pointe 26. Dans l'exemple, la deuxième surface de commande de basculement 120 s'étend axialement vers le bas depuis le corps interne 126 de la portion de guidage 29 du bras transversal 30. L'avancement dans le sens retour, ici vers le haut, de l'écrou à double filet 70 fait que, par l'action de la deuxième surface de commande de basculement 120 sur le deuxième palpeur de basculement 116, ce dernier provoque le basculement de l'écrou à double filet 70 vers sa position aller. Si, au moment de ce basculement, une situation de « dent contre dent » empêche momentanément le filet aller complémentaire 70a appartenant à l'écrou à double filet 70 de s'engager avec le filet aller de la vis d'entraînement 38, donc empêchant momentanément l'écrou à double filet 70 d'atteindre sa position aller, les moyens élastiques 115 permettent, en se comprimant, d'absorber l'écart de positionnement sans engendrer d'effort trop important entre le deuxième palpeur de basculement 116 et la deuxième surface de commande de basculement 120 correspondante. Une fois le basculement opéré, le chariot 36 peut inverser son sens de déplacement et repartir dans le sens aller, ici vers le bas.

On comprend donc que cette deuxième dérivation permet, avec les deux moyens de commande de basculement inverses, d'imprimer au chariot 36 et donc à l'outil de découpe 34 un mouvement de plusieurs allers et retours successifs entre une position haute et une position basse qui sont déterminées par les positions respectives de la première surface de commande de basculement 118 et de la deuxième surface de commande de basculement 120. Dans l'exemple, la position axiale de la deuxième surface de commande 120, et donc la position axiale du point de basculement du sens retour vers le sens aller, est réglable par le déplacement du bras transversal 30 de support de la contre-pointe 26.

Dans l'exemple illustré, il est prévu que ce déplacement du bras transversal 30 de support de la contre-pointe 26 soit fait manuellement par l'utilisateur, après chargement du fruit ou légume, en amenant la contre-pointe 26 au contact de l'extrémité supérieure du fruit ou légume. Dans l'exemple illustré, un mécanisme de serrage manuel 31 est prévu pour bloquer la position du bras transversal 30 sur la colonne 28, ce qui a pour avantage de bloquer la position axiale de la deuxième surface de commande de basculement 120, empêchant celle-ci de se déplacer sous l'effet de l'interaction avec le palpeur de commande 116.

Ce deuxième mode de réalisation est par exemple particulièrement adapté pour prélever une spirale de chair du fruit ou légume, spirale qui sera essentiellement hélicoïdale, mais qui pourra être par exemple être dépliée de manière à former un « spaghetti » de la chair du fruit ou légume. En effet, en permettant au dispositif 12 de réaliser automatiquement, sans intervention de l'utilisateur, une multitude d'allers-retours, il permettra de prélever la chair du fruit aux légumes sur plusieurs passes en profondeur selon la direction radiale, éventuellement jusqu'à atteindre le centre du fruit ou légume, ou un noyau de celui-ci.

On a décrit donc ci-dessus les avantages d'un dispositif comportant un commutateur mécanique 68 qui présente au moins un état aller et un état retour pour déterminer le sens aller ou le sens retour du mouvement alternatif du chariot 36 pour un même sens donné de rotation de la vis d'entraînement.

On a décrit aussi que le dispositif 12 peut comporter une contre-pointe 26 munie de moyens d'accouplement débrayable avec le chariot 36 de telle sorte que, dans un premier trajet aller ou retour, le chariot 36 entraîne avec lui la contre-pointe 26 depuis sa position reculée vers sa position de de maintien du fruit ou légume, et que, au-delà de cette position, les moyens d'accouplement débrayable se découplent pour permettre la poursuite du mouvement de sens aller ou de sens retour du chariot. Cette caractéristique peut être mise en œuvre dans un dispositif 12 indépendamment de la présence ou pas d'un commutateur mécanique présentant au moins un état aller et un état retour pour déterminer le sens aller ou le sens retour du mouvement alternatif du chariot pour un même sens donné de rotation de la vis d'entraînement. Cette caractéristique d'accouplement débrayable entre la contre-pointe 26 et le chariot 36 est aussi indépendante de la présence d'une vis d'entraînement à double hélice, et même indépendante de comment le chariot est entraîné.

Ainsi, on peut avantageusement concevoir dispositif de préparation culinaire pour pratiquer une découpe hélicoïdale sur un fruit ou un légume, dans lequel :
- le dispositif 12 comporte un support 22 qui est fixe lors du fonctionnement du dispositif;
- le dispositif 12 comporte un entraîneur principal 24 configuré pour porter le fruit ou légume et pour entraîner le fruit ou légume en rotation autour d'un axe principal (A1) par rapport au support 22;
- le dispositif 12 comporte un porte-outil 32 qui est configuré pour porter un outil de découpe 34 et qui est porté par un chariot 36;
- le chariot 36 est entraîné en translation par rapport au support 22, suivant un mouvement selon une direction de translation de chariot qui est parallèle à l'axe principal A1 ;
- le dispositif 12 comporte une contre-pointe 26 qui est agencée selon l'axe principal A1 et qui est prévue pour venir en contact avec le fruit ou légume pour stabiliser la rotation du fruit ou légume autour de l'axe principal A1, la contre-pointe 26 étant mobile axialement par rapport au support 22 entre une position reculée et une position de maintien du fruit ou légume,
un tel dispositif étant remarquable en ce que la contre-pointe 26 est munie de moyens d'accouplement débrayable avec le chariot 36 de telle sorte que, dans un premier trajet, le chariot 36 entraîne avec lui la contre-pointe 26 depuis sa position reculée vers sa position de de maintien du fruit ou légume, et en ce que, au-delà de cette position, les moyens d'accouplement débrayable se découplent pour permettre la poursuite du mouvement de sens aller ou de sens retour du chariot.

Comme évoqué plus haut, il pourra être avantageux que les moyens d'accouplement débrayable se découplent automatiquement sous l'effort généré par la poursuite du mouvement de sens aller ou de sens retour du chariot 36 lorsque la contre-pointe 26 atteint sa position de maintien du fruit ou légume.

De même, il pourra il pourra être avantageux que les moyens d'accouplement débrayable comportent un ou plusieurs aimants 110, 112. Le ou les aimants mis en œuvre peuvent chacun être réalisés notamment sous la forme d'aimant permanent ou sous forme d'électro-aimant. Mais de tels moyens d'accouplement débrayable pourront, en complément ou en alternative, comprendre deux éléments mécaniques de formes complémentaires, liés respectivement au chariot 36 et à la contre-pointe 26, qui s'emboîtent élastiquement de manière réversible, ou qui s'accrochent l'un l'autre de manière réversible.

## Revendications

1. Dispositif (12) de préparation culinaire pour pratiquer une découpe hélicoïdale sur un fruit ou un légume, dans lequel :
- le dispositif (12) comporte un support (22) qui est fixe lors du fonctionnement du dispositif (12);
- le dispositif (12) comporte un entraîneur principal (24) configuré pour porter le fruit ou légume et pour entraîner le fruit ou légume en rotation autour d'un axe principal (A1) par rapport au support (22) ;
- le dispositif (12) comporte un outil de découpe (34) qui est porté par un chariot (36) ;
- le chariot (36) est entraîné en translation par rapport au support (22), suivant un mouvement alternatif de sens aller et de sens retour selon une direction de translation de chariot qui est parallèle à l'axe principal (A1), par une vis d'entraînement (38) à double hélice qui présente un axe de vis (A2) parallèle à l'axe principal (A1) ;
- la vis d'entraînement (38) est rotative par rapport au support (22), autour de son axe de vis (A2) ;
- la vis d'entraînement (38) comprend un filet aller et un filet retour ;
- le chariot (36) coopère avec le filet aller de la vis d'entraînement (38) pour causer une translation en sens aller du chariot (36) selon la direction de translation de chariot, et avec le filet retour de la vis d'entraînement (38) pour causer une translation en sens retour selon la direction de translation de chariot ;
**caractérisé en ce que** le dispositif (12) comporte un commutateur mécanique (68) qui présente au moins un état aller et un état retour pour déterminer le sens aller ou le sens retour du mouvement alternatif du chariot (36) pour un même sens donné de rotation de la vis d'entraînement (38).

2. Dispositif (12) selon la revendication 1, **caractérisé en ce que**, dans son état aller, le commutateur mécanique (68) assure que le chariot coopère avec le filet aller de la vis d'entraînement (38), tandis que dans son état retour, le commutateur mécanique (68) assure que le chariot (36) coopère avec le filet retour de la vis d'entraînement (38).

3. Dispositif (12) selon l'une des revendications 1 ou 2, **caractérisé en ce que**, le commutateur mécanique (68) présente un état intermédiaire de débrayage dans lequel le chariot (36) ne coopère ni avec le filet aller ni avec le filet retour de la vis d'entraînement (38), de sorte qu'une rotation de la vis d'entraînement (38) ne provoque pas de translation du chariot (36) selon la direction de translation de chariot.

4. Dispositif (12) selon l'une quelconque des revendications précédentes, **caractérisé en ce que** le commutateur mécanique (68) est porté par le chariot (36).

5. Dispositif (12) selon l'une quelconque des revendications précédentes, **caractérisé en ce que** le commutateur mécanique (68) est basculé de son état aller à son état retour par coopération mécanique avec une première surface de commande de basculement (118) du dispositif (12).

6. Dispositif (12) selon l'une quelconque des revendications précédentes en combinaison avec la revendication 3, **caractérisé en ce que** le commutateur mécanique (68) est basculé vers son état intermédiaire de débrayage par coopération mécanique avec une surface de commande de débrayage (108).

7. Dispositif (12) selon l'une quelconque des revendications précédentes, **caractérisé en ce que** le dispositif (12) permet un basculement manuel du commutateur mécanique (68) vers l'un ou l'autre de son état aller et de son état retour.

8. Dispositif (12) selon la revendication 7, **caractérisé en ce que** le dispositif (12) comporte un sélecteur manuel (86) qui permet de basculer manuellement le commutateur mécanique (68) vers l'un ou l'autre de son état aller et de son état retour.

9. Dispositif (12) selon l'une quelconque des revendications précédentes, **caractérisé en ce que** le commutateur mécanique (68) comporte un filet aller complémentaire (70a) qui est de forme complémentaire à celle du filet aller de la vis d'entraînement (38), et un filet retour complémentaire (70b) qui est de forme complémentaire à celle du filet retour de la vis d'entraînement (38).

10. Dispositif (12) selon la revendication 9, **caractérisé en ce que** le commutateur mécanique (68), dans son état aller, amène uniquement son filet aller complémentaire (70a) en coopération mécanique avec le filet aller de la vis d'entraînement (38), et, dans son état retour, amène uniquement son filet retour complémentaire (70b) en coopération mécanique avec le filet retour de la vis d'entraînement (38).

11. Dispositif (12) selon la revendication 10, **caractérisé en ce que** le commutateur mécanique (68) comporte un écrou à double filet (70) comprenant un passage de vis (72) qui est un orifice qui traverse l'écrou à double filet (70) de part en part selon la direction de l'axe de vis (A2) mais dont les dimensions transversales sont supérieures à celle de la vis d'entraînement (38), le passage de vis (72) présentant une paroi latérale divisée en deux parties, les deux parties étant écartées chacune d'un côté de l'axe de vis (A2), l'une des parties étant munie du filet aller complémentaire (70a), complémentaire du filet aller de la vis d'entraînement (38), et l'autre des parties, à l'opposé de la première par rapport à l'axe de vis (A2), étant munie du filet retour complémentaire (70b), complémentaire du filet retour de la vis d'entraînement (38), et **en ce que** l'écrou à double filet (70) est mobile perpendiculairement à l'axe de vis (A2) entre une position aller correspondant à l'état aller du commutateur mécanique, et une position retour correspondant à l'état retour du commutateur mécanique (68) de telle sorte que, dans l'état aller du commutateur mécanique (68), seul le filet aller complémentaire (70a) appartenant à l'écrou à double filet (70) coopère avec le filet aller de la vis d'entraînement (38), et, dans l'état retour du commutateur mécanique (68), seul le filet retour complémentaire (70b) appartenant à l'écrou à double filet (70) coopère avec le filet retour de la vis d'entraînement (38).

12. Dispositif (12) selon la revendication 11 prise en combinaison avec l'une des revendications 5 ou 6, **caractérisé en ce que** le basculement du commutateur mécanique (68) est obtenu en basculant l'écrou à double filet (70) par une première surface de commande de basculement (118) ou par une surface de commande de débrayage (108).

13. Dispositif (12) selon la revendication 12, **caractérisé en ce que** le basculement de l'écrou à double filet (70) par la première surface de commande de basculement (118) ou par la surface de commande de débrayage (108) est effectué par l'intermédiaire de moyens élastiques (115).

14. Dispositif (12) selon l'une des revendications 10 à 13, **caractérisé en ce que** le commutateur mécanique (68) comporte un corps principal qui est mobile perpendiculairement à l'axe de vis (A2) entre une position aller correspondant à l'état aller du commutateur mécanique (68), et une position retour correspondant à l'état retour du commutateur mécanique (68), et **en ce que** le filet aller complémentaire (70a) et le filet retour complémentaire (70b) appartenant au commutateur mécanique (68) sont montés mobiles sur le corps principal avec interposition de moyens élastiques perpendiculairement à l'axe de vis (A2) de telle sorte que, dans l'état aller du commutateur mécanique (68), le filet aller complémentaire (70a) appartenant au commutateur mécanique (68) est en appui sur la vis d'entraînement (38) perpendiculairement à l'axe de vis (A2), et, dans l'état retour du commutateur mécanique (68), le filet retour complémentaire (70b) appartenant au commutateur mécanique (68) est en appui sur la vis d'entraînement (38) perpendiculairement à l'axe de vis (A2).

15. Dispositif (12) selon la revendication 14, **caractérisé en ce que** le corps principal du commutateur mécanique (68) est monté pivotant sur le chariot (36), autour d'un axe (A4) parallèle à l'axe de vis (A2) mais distinct de l'axe de vis (A2), entre sa position aller et sa position retour.

16. Dispositif (12) selon l'une des revendications 12 ou 13 prise en combinaison avec la revendication 11, **caractérisé en ce que** le corps principal du commutateur mécanique (68) est un porte-écrou (74), et **en ce que** l'écrou à double filet (70), qui comprend le filet aller complémentaire (70a) et le filet retour complémentaire (70b) appartenant au commutateur mécanique (68), est monté sur le porte-écrou (74) avec interposition de moyens élastiques perpendiculairement à l'axe de vis (A2).

17. Dispositif (12) selon la revendication 13, **caractérisé en ce que** l'écrou à double filet (70) comporte des palpeurs de basculement (114, 116) présentant une élasticité par rapport à l'écrou à double filet (70).

18. Dispositif (12) selon l'une quelconque des revendications précédentes, **caractérisé en ce que** le support (22) comporte une colonne (28) creuse qui est cylindrique, qui s'étend selon l'axe de vis (A2) autour de l'axe de vis (A2) et qui présente un profil transversal fermé, à l'exception de la présence d'une fente axiale (50) qui s'étend parallèlement à l'axe de vis (A2) selon une dimension axiale au moins égale à la course maximale du chariot (36), **en ce que** la vis d'entraînement (38) est contenue dans la colonne (28) creuse du support (22), et **en ce que** le chariot (36) comprend une portion interne, contenue à l'intérieur de la colonne (28) creuse, une portion externe, agencée à l'extérieur de la colonne (28) creuse, et une portion de liaison qui lie la portion interne et la portion externe et qui circule dans la fente axiale (50) de la colonne (28) creuse au cours du mouvement alternatif de sens aller et de sens retour du chariot (36).

19. Dispositif (12) selon la revendication 18 prise en combinaison avec la revendication 8, **caractérisé en ce que** le sélecteur manuel (86) est agencé à l'extérieur de la colonne (28) creuse et coopère avec le commutateur mécanique (68) au travers de la fente axiale (50) de la colonne (28) creuse.

20. Dispositif (12) selon la revendication 19, **caractérisé en ce que** le sélecteur manuel (86) présente une dimension axiale au moins égale à celle de la fente axiale (50), **en ce que** le sélecteur manuel (86) est fixe par rapport au support selon la direction de la fente axiale (50), et **en ce que** le sélecteur manuel (86) coopère avec le commutateur mécanique (68) par une glissière orientée selon la direction de l'axe principal (A1).

21. Dispositif (12) selon la revendication 20, **caractérisé en ce que** le sélecteur manuel (86) occulte la fente axiale (50).

22. Dispositif (12) selon l'une quelconque des revendications précédentes prise en combinaison avec la revendication 5, **caractérisé en ce que** la position de la première surface de commande de basculement (118) par rapport au support (22), selon la direction de translation de chariot, est fixe lors du fonctionnement mais est réglable.

23. Dispositif (12) selon l'une quelconque des revendications précédentes, **caractérisé en ce que** le commutateur mécanique (68) est basculé de son état retour à son état aller par une deuxième surface de commande de basculement (120) du dispositif (12).

24. Dispositif (12) selon la revendication 23, **caractérisé en ce que** la position de la deuxième surface de commande de basculement (120), selon la direction de translation de chariot (36), et par rapport au support (22), est fixe lors du fonctionnement mais est réglable.

25. Dispositif (12) selon l'une quelconque des revendications précédentes, **caractérisé en ce que** le dispositif (12) comporte une contre-pointe (26) qui est agencée selon l'axe principal (A1) et qui est prévue pour venir en contact avec le fruit ou légume pour stabiliser la rotation du fruit ou légume autour de l'axe principal (A1), **en ce que** la contre-pointe (26) est mobile axialement par rapport au support (22) entre une position reculée et une position de maintien du fruit ou légume, et **en ce que** la contre-pointe (26) est munie de moyens d'accouplement débrayable avec le chariot (36) de telle sorte que, dans un premier trajet aller ou retour, le chariot (36) entraîne avec lui la contre-pointe (26) depuis sa position reculée vers sa position de maintien du fruit ou légume, et **en ce que**, au-delà de cette position, les moyens d'accouplement débrayable se découplent pour permettre la poursuite du mouvement de sens aller ou de sens retour du chariot.

26. Dispositif (12) selon la revendication 25, **caractérisé en ce que** les moyens d'accouplement débrayable se découplent automatiquement sous l'effort généré par la poursuite du mouvement de sens aller ou de sens retour du chariot (36) lorsque la contre-pointe (26) atteint sa position de maintien du fruit ou légume.

27. Dispositif (12) selon l'une des revendications 25 ou 26, **caractérisé en ce que** les moyens d'accouplement débrayable comportent un aimant (110, 112).

28. Dispositif (12) selon l'une quelconque des revendications précédentes, **caractérisé en ce que** le filet aller de la vis d'entraînement (38) et le filet retour de la vis d'entraînement (38) présentent une longueur de pas différente.

29. Appareil motorisé (10) comprenant un dispositif (12) selon l'une quelconque des revendications précédentes, **caractérisé en ce que** l'appareil motorisé (10) comporte une base motorisée (14) ayant un socle (16) comprenant un moteur d'entraînement, **en ce que** le dispositif (12) est fixé sur le socle (16) de la base motorisée (14), et **en ce que** le moteur d'entraînement assure l'entraînement en rotation de la vis d'entraînement (38) par rapport au support (22), autour de son axe de vis (A2).

30. Appareil motorisé (10) selon la revendication 29, **caractérisé en ce que** le dispositif (12) est un dispositif amovible qui est fixé de manière amovible sur le socle (16) de la base motorisée (14) de l'appareil (10).

31. Appareil motorisé (10) selon la revendication 30, **caractérisé en ce que** le socle (16) de la base motorisée (14) comporte une griffe de fixation (18) du dispositif (12) et un coupleur (20) entraîné en rotation par le moteur d'entraînement, et **en ce que**
- le support du dispositif (12) amovible comporte une griffe de fixation qui est complémentaire de la griffe de fixation (18) du socle (16) pour assurer la fixation amovible du dispositif (12) amovible sur le socle (16) de la base motorisée (14) ;
- le dispositif (12) amovible comporte un autre coupleur qui est complémentaire du coupleur (20) du socle (16) et qui est lié en rotation d'une part avec l'entraîneur principal (24) et d'autre part avec la vis d'entraînement (38), le coupleur (20) du socle et l'autre coupleur du dispositif (12) amovible étant accouplés en rotation lorsque le dispositif (12) amovible est fixé sur le socle (16).

## Patentansprüche

1. Vorrichtung (12) zur Zubereitung von Lebensmitteln zum Ausführen eines spiralförmigen Schnitts in Obst oder Gemüse, wobei:
• die Vorrichtung (12) eine Halterung (22) umfasst, die während des Betriebs der Vorrichtung (12) fest ist;
• die Vorrichtung (12) einen Hauptantrieb (24) einschließt, der konfiguriert ist, um das Obst oder Gemüse zu halten und um das Obst oder Gemüse um eine Hauptachse (A1) relativ zur Halterung (22) zu drehen;
• die Vorrichtung (12) ein Schneidwerkzeug (34) umfasst, das auf einem Wagen (36) montiert ist;
• der Wagen (36) relativ zur Halterung (22) in einer Rück- und Hinbewegung entlang einer Richtung parallel zur Hauptachse (A1) durch eine Doppelwendelspindel (38) mit einer Spindelachse (A2) parallel zur Hauptachse (A1) angetrieben wird;
• die Antriebsspindel (38) um ihre Spindelachse (A2) relativ zur Halterung (22) drehbar ist;
• die Antriebsspindel (38) ein Vorwärts- und ein Rückwärtsgewinde umfasst;
• der Wagen (36) mit dem Vorwärtsgewinde der Antriebsspindel (38) kooperiert, um eine Vorwärtsbewegung des Wagens (36) in der Translationsrichtung zu verursachen, und mit dem Rückwärtsgewinde der Antriebsspindel (38) kooperiert, um eine Rückwärtsbewegung ebenfalls in der Translationsrichtung zu verursachen; **dadurch gekennzeichnet, dass** die Vorrichtung (12) einen mechanischen Schalter (68) umfasst, der mindestens einen Vorwärtszustand und einen Rückwärtszustand aufweist, um die Vorwärts- oder Rückwärtsrichtung der alternierenden Bewegung des Wagens (36) für eine gegebene Drehrichtung der Antriebsspindel (38) zu bestimmen.

2. Vorrichtung (12) gemäß Anspruch 1, **dadurch gekennzeichnet, dass** im Vorwärtszustand der mechanische Schalter (68) gewährleistet, dass der Wagen mit dem Vorwärtsgewinde der Antriebsspindel (38) kooperiert, während im Rückwärtszustand der mechanische Schalter (68) gewährleistet, dass der Wagen (36) mit dem Rückwärtsgewinde der Antriebsspindel (38) kooperiert.

3. Vorrichtung (12) gemäß einem der Ansprüche 1 oder 2, **dadurch gekennzeichnet, dass** der mechanische Schalter (68) einen Zwischenzustand des Auskuppelns aufweist, in dem der Wagen (36) weder mit dem Vorwärtsgewinde noch mit dem Rückwärtsgewinde der Antriebsspindel (38) kooperiert, sodass eine Drehung der Antriebsspindel (38) keine Bewegung des Wagens (36) in der Translationsrichtung verursacht.

4. Vorrichtung (12) gemäß einem der vorangegangenen Ansprüche, **dadurch gekennzeichnet, dass** der mechanische Schalter (68) auf dem Wagen (36) montiert ist.

5. Vorrichtung (12) gemäß einem der vorangegangenen Ansprüche, **dadurch gekennzeichnet, dass** der mechanische Schalter (68) durch mechanische Kooperation mit einer ersten Kippsteuerfläche (118) der Vorrichtung (12) von seinem Vorwärtszustand in seinen Rückwärtszustand gekippt wird.

6. Vorrichtung (12) gemäß einem der vorangegangenen Ansprüche in Kombination mit Anspruch 3, **dadurch gekennzeichnet, dass** der mechanische Schalter (68) durch mechanische Kooperation mit einer Auskuppelungssteuerfläche (108) in seinen Zwischenzustand des Auskuppelns gekippt wird.

7. Vorrichtung (12) gemäß einem der vorangegangenen Ansprüche, **dadurch gekennzeichnet, dass** die Vorrichtung (12) ein manuelles Kippen des mechanischen Schalters (68) in einen der Zustände, Vorwärts oder Rückwärts, ermöglicht.

8. Vorrichtung (12) gemäß Anspruch 7, **dadurch gekennzeichnet, dass** die Vorrichtung (12) einen manuellen Wähler (86) umfasst, der es ermöglicht, den mechanischen Schalter (68) manuell in einen der Zustände, Vorwärts oder Rückwärts, zu kippen.

9. Vorrichtung (12) gemäß einem der vorangegangenen Ansprüche, **dadurch gekennzeichnet, dass** der mechanische Schalter (68) ein ergänzendes Vorwärtsgewinde (70a) umfasst, das in Form zum Vorwärtsgewinde der Antriebsspindel (38) komplementär ist, und ein ergänzendes Rückwärtsgewinde (70b), das in Form zum Rückwärtsgewinde der Antriebsspindel (38) komplementär ist.

10. Vorrichtung (12) gemäß Anspruch 9, **dadurch gekennzeichnet, dass** der mechanische Schalter (68) in seinem Vorwärtszustand lediglich sein ergänzendes Vorwärtsgewinde (70a) in mechanische Kooperation mit dem Vorwärtsgewinde der Antriebsspindel (38) bringt und in seinem Rückwärtszustand lediglich sein ergänzendes Rückwärtsgewinde (70b) in mechanische Kooperation mit dem Rückwärtsgewinde der Antriebsspindel (38) bringt.

11. Vorrichtung (12) gemäß Anspruch 10, **dadurch gekennzeichnet, dass** der mechanische Schalter (68) ein Doppelgewindenut (70) umfasst, das eine Durchgangsbohrung (72) enthält, die als Öffnung in ihrer Gesamtheit durch das Doppelgewindenut (70) entlang der Spindelachse (A2) verläuft, deren Querdimensionen jedoch größer sind als die der Antriebsspindel (38), wobei die Durchgangsbohrung (72) eine Seitenwand umfasst, die in zwei Teile geteilt ist, wobei sich die Teile jeweils auf gegenüberliegenden Seiten der Spindelachse (A2) befinden, von denen einer mit dem ergänzenden Vorwärtsgewinde (70a) ausgestattet ist, das zum Vorwärtsgewinde der Antriebsspindel (38) komplementär ist, und der andere Teil, im Gegensatz zu dem ersten relativ zur Spindelachse (A2), mit dem ergänzenden Rückwärtsgewinde (70b) ausgestattet ist, das zum Rückwärtsgewinde der Antriebsspindel (38) komplementär ist, und dadurch, dass das Doppelgewindenut (70) senkrecht zur Spindelachse (A2) zwischen einer Vorwärtsposition, die dem Vorwärtszustand des mechanischen Schalters entspricht, und einer Rückwärtsposition, die dem Rückwärtszustand des mechanischen Schalters (68) entspricht, beweglich ist, sodass im Vorwärtszustand des mechanischen Schalters (68) nur das ergänzende Vorwärtsgewinde (70a) des Doppelgewindenuts (70) mit dem Vorwärtsgewinde der Antriebsspindel (38) kooperiert, und im Rückwärtszustand des mechanischen Schalters (68) nur das ergänzende Rückwärtsgewinde (70b) des Doppelgewindenuts (70) mit dem Rückwärtsgewinde der Antriebsspindel (38) kooperiert.

12. Vorrichtung (12) gemäß Anspruch 11 in Kombination mit einem der Ansprüche 5 oder 6, **dadurch gekennzeichnet, dass** die Kippbewegung des mechanischen Schalters (68) durch das Kippen des Doppelgewindenuts (70) mit einer ersten Kippsteuerfläche (118) oder einer Auskuppelungssteuerfläche (108) erfolgt.

13. Vorrichtung (12) gemäß Anspruch 12, **dadurch gekennzeichnet, dass** die Kippbewegung des Doppelgewindenuts (70) durch die erste Kippsteuerfläche (118) oder die Auskuppelungssteuerfläche (108) mittels elastischer Mittel (115) erfolgt.

14. Vorrichtung (12) gemäß einem der Ansprüche 10 bis 13, **dadurch gekennzeichnet, dass** der mechanische Schalter (68) einen Hauptkörper umfasst, der senkrecht zur Spindelachse (A2) zwischen einer Vorwärtsposition, die dem Vorwärtszustand des mechanischen Schalters (68) entspricht, und einer Rückwärtsposition, die dem Rückwärtszustand des mechanischen Schalters (68) entspricht, beweglich ist, und wobei das ergänzende Vorwärtsgewinde (70a) und das ergänzende Rückwärtsgewinde (70b) des mechanischen Schalters (68) auf dem Hauptkörper beweglich mit Interposition von elastischen Mitteln senkrecht zur Spindelachse (A2) montiert sind, sodass im Vorwärtszustand des mechanischen Schalters (68) das ergänzende Vorwärtsgewinde (70a) des mechanischen Schalters (68) senkrecht zur Spindelachse (A2) auf die Antriebsspindel (38) gedrückt wird und im Rückwärtszustand des mechanischen Schalters (68) das ergänzende Rückwärtsgewinde (70b) des mechanischen Schalters (68) senkrecht zur Spindelachse (A2) auf die Antriebsspindel (38) gedrückt wird.

15. Vorrichtung (12) gemäß Anspruch 14, **dadurch gekennzeichnet, dass** der Hauptkörper des mechanischen Schalters (68) schwenkbar am Wagen (36) montiert ist, um eine Achse (A4), die parallel, aber von der Spindelachse (A2) getrennt ist, zwischen seiner Vorwärts- und Rückwärtsposition.

16. Vorrichtung (12) gemäß einem der Ansprüche 12 oder 13 in Kombination mit Anspruch 11, **dadurch gekennzeichnet, dass** der Hauptkörper des mechanischen Schalters (68) ein Mutternhalter (74) ist und dass die Doppelgewindenut (70), die das ergänzende Vorwärtsgewinde (70a) und das ergänzende Rückwärtsgewinde (70b) des mechanischen Schalters (68) umfasst, auf dem Mutternhalter (74) mit Interposition elastischer Mittel senkrecht zur Spindelachse (A2) montiert ist.

17. Vorrichtung (12) gemäß Anspruch 13, **dadurch gekennzeichnet, dass** die Doppelgewindenut (70) Kippfühler (114, 116) umfasst, die gegenüber der Doppelgewindenut (70) Elastizität aufweisen.

18. Vorrichtung (12) gemäß einem der vorangegangenen Ansprüche, **dadurch gekennzeichnet, dass** der Träger (22) eine hohle Säule (28) umfasst, die zylindrisch ist, sich entlang der Spindelachse (A2) um die Spindelachse (A2) erstreckt und ein geschlossenes Querschnittsprofil aufweist, mit Ausnahme einer axialen Nut (50), die sich parallel zur Spindelachse (A2) in einer axialen Dimension mindestens gleich dem maximalen Hub des Wagens (36) erstreckt, dass die Antriebsspindel (38) innerhalb der hohlen Säule (28) des Trägers (22) enthalten ist, und dass der Wagen (36) einen inneren Abschnitt umfasst, der innerhalb der hohlen Säule (28) enthalten ist, einen äußeren Abschnitt, der außerhalb der hohlen Säule (28) angeordnet ist, und einen Verbindungsabschnitt, der den inneren und äußeren Abschnitt verbindet und durch die axiale Nut (50) der hohlen Säule (28) während der alternierenden Vorwärts- und Rückwärtsbewegung des Wagens (36) sich bewegt.

19. Vorrichtung (12) gemäß Anspruch 18 in Kombination mit Anspruch 8, **dadurch gekennzeichnet, dass** der manuelle Wähler (86) außerhalb der hohlen Säule (28) angeordnet ist und durch die axiale Nut (50) der hohlen Säule (28) mit dem mechanischen Schalter (68) kooperiert.

20. Vorrichtung (12) gemäß Anspruch 19, **dadurch gekennzeichnet, dass** der manuelle Wähler (86) eine axiale Dimension mindestens gleich der axialen Nut (50) aufweist, dass der manuelle Wähler (86) im Verhältnis zum Träger in der Richtung der axialen Nut (50) fest ist, und dass der manuelle Wähler (86) mit dem mechanischen Schalter (68) durch eine in der Richtung der Hauptachse (A1) orientierte Klinge kooperiert.

21. Vorrichtung (12) gemäß Anspruch 20, **dadurch gekennzeichnet, dass** der manuelle Wähler (86) die axiale Nut (50) verdeckt.

22. Vorrichtung (12) gemäß einem der vorangegangenen Ansprüche in Kombination mit Anspruch 5, **dadurch gekennzeichnet, dass** die Position der ersten Kippsteuerfläche (118) im Verhältnis zum Träger (22), in der Richtung der Wagentranslation, während des Betriebs fest ist, aber einstellbar.

23. Vorrichtung (12) gemäß einem der vorangegangenen Ansprüche, **dadurch gekennzeichnet, dass** der mechanische Schalter (68) durch eine zweite Kippsteuerfläche (120) der Vorrichtung (12) von seinem Rückwärtszustand in seinen Vorwärtszustand gekippt wird.

24. Vorrichtung (12) gemäß Patentanspruch 23, **dadurch gekennzeichnet, dass** die Position der zweiten Kippsteuerfläche (120) in der Richtung der Wagentranslation (36) im Verhältnis zum Träger (22) während des Betriebs fest ist, aber einstellbar.

25. Vorrichtung (12) gemäß einem der vorangegangenen Ansprüche, **dadurch gekennzeichnet, dass** die Vorrichtung (12) eine Gegenstütze (26) umfasst, die entlang der Hauptachse (A1) angeordnet ist, um mit dem Obst oder Gemüse in Kontakt zu treten, um die Drehung des Obstes oder Gemüses um die Hauptachse (A1) zu stabilisieren, dass die Gegenstütze (26) axial im Verhältnis zum Träger (22) zwischen einer zurückgezogenen Position und einer Halteposition des Obstes oder Gemüses beweglich ist, und dass die Gegenstütze (26) mit lösbaren Kupplungsmitteln mit dem Wagen (36) ausgestattet ist, sodass bei einer ersten Vorwärts- oder Rückwärtsfahrt der Wagen (36) die Gegenstütze (26) von ihrer zurückgezogenen Position zu ihrer Halteposition des Obstes oder Gemüses bewegt, und dass diese Mittel jenseits dieser Position entkoppeln, um die Fortsetzung der Vorwärts- oder Rückwärtsbewegung des Wagens zu ermöglichen.

26. Vorrichtung (12) gemäß Patentanspruch 25, **dadurch gekennzeichnet, dass** die lösbaren Kupplungsmittel automatisch unter der durch die Fortsetzung der Vorwärts- oder Rückwärtsbewegung des Wagens (36) erzeugten Kraft entkoppeln, wenn die Gegenstütze (26) ihre Halteposition des Obstes oder Gemüses erreicht.

27. Vorrichtung (12) gemäß einem der Ansprüche 25 oder 26, **dadurch gekennzeichnet, dass** die lösbaren Kupplungsmittel einen Magneten (110, 112) umfassen.

28. Vorrichtung (12) gemäß einem der vorangegangenen Ansprüche, **dadurch gekennzeichnet, dass** das Vorwärtsgewinde der Antriebsspindel (38) und das Rückwärtsgewinde der Antriebsspindel (38) unterschiedliche Gewindelängen aufweisen.

29. Motorisiertes Gerät (10), das eine Vorrichtung (12) gemäß einem der vorangegangenen Ansprüche umfasst, **dadurch gekennzeichnet, dass** das motorisierte Gerät (10) über eine motorisierte Basis (14) verfügt, die eine Basisstruktur (16) mit einem Antriebsmotor umfasst, dass die Vorrichtung (12) auf der Basisstruktur (16) der motorisierten Basis (14) befestigt ist, und dass der Antriebsmotor die Antriebsspindel (38) relativ zum Träger (22) um ihre Spindelachse (A2) dreht.

30. Motorisiertes Gerät (10) gemäß Anspruch 29, **dadurch gekennzeichnet, dass** die Vorrichtung (12) eine abnehmbare Vorrichtung ist, die lösbar auf der Basisstruktur (16) der motorisierten Basis (14) des Geräts (10) befestigt ist.

31. Motorisiertes Gerät (10) gemäß Anspruch 30, **dadurch gekennzeichnet, dass** die Basisstruktur (16) der motorisierten Basis (14) eine Befestigungsklaue (18) der Vorrichtung (12) und einen Kuppler (20) umfasst, der durch den Antriebsmotor in Rotation versetzt wird, und dass:
• der Träger der abnehmbaren Vorrichtung (12) über eine Befestigungsklaue verfügt, die komplementär zur Befestigungsklaue (18) der Basisstruktur (16) ist, um die lösbare Befestigung der abnehmbaren Vorrichtung (12) auf der Basisstruktur (16) der motorisierten Basis (14) zu gewährleisten;
• die abnehmbare Vorrichtung (12) über einen weiteren Kuppler verfügt, der komplementär zum Kuppler (20) der Basisstruktur (16) ist und einerseits mit dem Hauptantrieb (24) und andererseits mit der Antriebsspindel (38) verbunden ist, wobei der Kuppler (20) der Basisstruktur und der andere Kuppler der abnehmbaren Vorrichtung (12) in Rotation verbunden sind, wenn die abnehmbare Vorrichtung (12) auf der Basisstruktur (16) befestigt ist.

## Claims

1. Culinary preparation device (12) for making a helical cut on a fruit or vegetable, wherein:
• the device (12) comprises a support (22) that is fixed during operation of the device (12);
• the device (12) comprises a main driver (24) configured to hold the fruit or vegetable and rotate the fruit or vegetable around a main axis (A1) relative to the support (22);
• the device (12) comprises a cutting tool (34) mounted on a carriage (36);
• the carriage (36) is driven in translation relative to the support (22), following an alternating back-and-forth movement in a direction parallel to the main axis (A1), by a double-helix drive screw (38) with a screw axis (A2) parallel to the main axis (A1);
• the drive screw (38) is rotatable relative to the support (22) around its screw axis (A2);
• the drive screw (38) includes a forward thread and a return thread;
• the carriage (36) cooperates with the forward thread of the drive screw (38) to cause forward translation of the carriage (36) in the translation direction and with the return thread of the drive screw (38) to cause a return translation in the translation direction; **characterized in that** the device (12) comprises a mechanical switch (68) with at least a forward state and a return state to determine the forward or return direction of the carriage's (36) alternating movement for a given direction of rotation of the drive screw (38).

2. Device (12) according to claim 1, **characterized in that**, in its forward state, the mechanical switch (68) ensures that the carriage cooperates with the forward thread of the drive screw (38), while in its return state, the mechanical switch (68) ensures that the carriage (36) cooperates with the return thread of the drive screw (38).

3. Device (12) according to one of claims 1 or 2, **characterized in that** the mechanical switch (68) has an intermediate disengagement state in which the carriage (36) cooperates neither with the forward thread nor with the return thread of the drive screw (38), so that rotation of the drive screw (38) does not cause translation of the carriage (36) in the translation direction.

4. Device (12) according to any of the preceding claims, **characterized in that** the mechanical switch (68) is mounted on the carriage (36).

5. Device (12) according to any of the preceding claims, **characterized in that** the mechanical switch (68) is flipped from its forward state to its return state by mechanical cooperation with a first tilt control surface (118) of the device (12).

6. Device (12) according to any of the preceding claims in combination with claim 3, **characterized in that** the mechanical switch (68) is flipped to its intermediate disengagement state by mechanical cooperation with a disengagement control surface (108).

7. Device (12) according to any of the preceding claims, **characterized in that** the device (12) allows manual flipping of the mechanical switch (68) to either its forward state or its return state.

8. Device (12) according to claim 7, **characterized in that** the device (12) comprises a manual selector (86) that allows manual flipping of the mechanical switch (68) to either its forward state or its return state.

9. Device (12) according to any of the preceding claims, **characterized in that** the mechanical switch (68) includes a complementary forward thread (70a) that is complementary in shape to the forward thread of the drive screw (38), and a complementary return thread (70b) that is complementary in shape to the return thread of the drive screw (38).

10. Device (12) according to claim 9, **characterized in that** the mechanical switch (68), in its forward state, brings only its complementary forward thread (70a) in mechanical cooperation with the forward thread of the drive screw (38), and, in its return state, brings only its complementary return thread (70b) in mechanical cooperation with the return thread of the drive screw (38).

11. Device (12) according to claim 10, **characterized in that** the mechanical switch (68) comprises a double-threaded nut (70) including a screw passage (72) which is an opening passing through the double-threaded nut (70) completely along the screw axis (A2) but whose transverse dimensions exceed those of the drive screw (38), the screw passage (72) having a lateral wall divided into two parts, each part spaced on opposite sides of the screw axis (A2), one part being provided with the complementary forward thread (70a), complementary to the forward thread of the drive screw (38), and the other part, opposite to the first relative to the screw axis (A2), being provided with the complementary return thread (70b), complementary to the return thread of the drive screw (38), and **in that** the double-threaded nut (70) is movable perpendicular to the screw axis (A2) between a forward position corresponding to the forward state of the mechanical switch, and a return position corresponding to the return state of the mechanical switch (68) such that, in the forward state of the mechanical switch (68), only the complementary forward thread (70a) belonging to the double-threaded nut (70) cooperates with the forward thread of the drive screw (38), and, in the return state of the mechanical switch (68), only the complementary return thread (70b) belonging to the double-threaded nut (70) cooperates with the return thread of the drive screw (38).

12. Device (12) according to claim 11 in combination with one of claims 5 or 6, **characterized in that** the flipping of the mechanical switch (68) is effected by flipping the double-threaded nut (70) with a first tilt control surface (118) or a disengagement control surface (108).

13. Device (12) according to claim 12, **characterized in that** the flipping of the double-threaded nut (70) with the first tilt control surface (118) or the disengagement control surface (108) is carried out by means of elastic elements (115).

14. Device (12) according to one of claims 10 to 13, **characterized in that** the mechanical switch (68) comprises a main body that is movable perpendicular to the screw axis (A2) between a forward position corresponding to the forward state of the mechanical switch (68), and a return position corresponding to the return state of the mechanical switch (68), and **in that** the complementary forward thread (70a) and the complementary return thread (70b) belonging to the mechanical switch (68) are mounted movable on the main body with interposition of elastic means perpendicular to the screw axis (A2) so that, in the forward state of the mechanical switch (68), the complementary forward thread (70a) belonging to the mechanical switch (68) is pressed on the drive screw (38) perpendicular to the screw axis (A2), and, in the return state of the mechanical switch (68), the complementary return thread (70b) belonging to the mechanical switch (68) is pressed on the drive screw (38) perpendicular to the screw axis (A2).

15. Device (12) according to claim 14, **characterized in that** the main body of the mechanical switch (68) is mounted pivotally on the carriage (36), around an axis (A4) parallel to but distinct from the screw axis (A2), between its forward and return positions.

16. Device (12) according to one of claims 12 or 13 taken in combination with claim 11, **characterized in that** the main body of the mechanical switch (68) is a nut carrier (74), and **in that** the double-threaded nut (70), which includes the complementary forward thread (70a) and the complementary return thread (70b) belonging to the mechanical switch (68), is mounted on the nut carrier (74) with interposition of elastic means perpendicular to the screw axis (A2).

17. Device (12) according to claim 13, **characterized in that** the double-threaded nut (70) includes tilting detectors (114, 116) showing elasticity relative to the double-threaded nut (70).

18. Device (12) according to any of the preceding claims, **characterized in that** the support (22) includes a hollow column (28) that is cylindrical, extending along the screw axis (A2) around the screw axis (A2) and having a closed transverse profile, except for the presence of an axial slot (50) extending parallel to the screw axis (A2) in an axial dimension at least equal to the maximum stroke of the carriage (36), **in that** the drive screw (38) is contained within the hollow column (28) of the support (22), and **in that** the carriage (36) includes an internal portion contained inside the hollow column (28), an external portion arranged outside the hollow column (28), and a linking portion connecting the internal and external portions, moving through the axial slot (50) of the hollow column (28) during the alternating forward and return movement of the carriage (36).

19. Device (12) according to claim 18 taken in combination with claim 8, **characterized in that** the manual selector (86) is arranged outside the hollow column (28) and cooperates with the mechanical switch (68) through the axial slot (50) of the hollow column (28).

20. Device (12) according to claim 19, **characterized in that** the manual selector (86) has an axial dimension at least equal to that of the axial slot (50), **in that** the manual selector (86) is fixed relative to the support in the direction of the axial slot (50), and **in that** the manual selector (86) cooperates with the mechanical switch (68) by means of a slide oriented along the direction of the main axis (A1).

21. Device (12) according to claim 20, **characterized in that** the manual selector (86) covers the axial slot (50).

22. Device (12) according to any of the preceding claims taken in combination with claim 5, **characterized in that** the position of the first tilt control surface (118) relative to the support (22), in the direction of carriage translation, is fixed during operation but adjustable.

23. Device (12) according to any of the preceding claims, **characterized in that** the mechanical switch (68) is flipped from its return state to its forward state by a second tilt control surface (120) of the device (12).

24. Device (12) according to claim 23, **characterized in that** the position of the second tilt control surface (120), in the direction of carriage translation (36), relative to the support (22), is fixed during operation but adjustable.

25. Device (12) according to any of the preceding claims, **characterized in that** the device (12) includes a tailstock (26) arranged along the main axis (A1) designed to contact the fruit or vegetable to stabilize rotation around the main axis (A1), **in that** the tailstock (26) is axially movable relative to the support (22) between a retracted position and a holding position of the fruit or vegetable, and **in that** the tailstock (26) is equipped with disengageable coupling means with the carriage (36) such that, in a first forward or return travel, the carriage (36) drives the tailstock (26) from its retracted position to its holding position of the fruit or vegetable, and once beyond this position, the disengageable coupling means decouple to allow continuation of the forward or return movement of the carriage.

26. Device (12) according to claim 25, **characterized in that** the disengageable coupling means automatically decouple under the force generated by the continuation of the forward or return movement of the carriage (36) when the tailstock (26) reaches its holding position of the fruit or vegetable.

27. Device (12) according to one of claims 25 or 26, **characterized in that** the disengageable coupling means include a magnet (110, 112).

28. Device (12) according to any of the preceding claims, **characterized in that** the forward thread of the drive screw (38) and the return thread of the drive screw (38) have different thread lengths.

29. Motorized apparatus (10) including a device (12) according to any of the preceding claims, **characterized in that** the motorized apparatus (10) comprises a motorized base (14) having a base structure (16) including a drive motor, **in that** the device (12) is fixed on the base structure (16) of the motorized base (14), and **in that** the drive motor ensures rotation of the drive screw (38) relative to the support (22) around its screw axis (A2).

30. Motorized apparatus (10) according to claim 29, **characterized in that** the device (12) is a removable device that is detachably fixed to the base structure (16) of the motorized base (14) of the apparatus (10).

31. Motorized apparatus (10) according to claim 30, **characterized in that** the base structure (16) of the motorized base (14) includes a fixing claw (18) for the device (12) and a coupling (20) driven in rotation by the drive motor, and **in that**:
• the support of the removable device (12) includes a fixing claw complementary to the fixing claw (18) of the base structure (16) to ensure detachable fixing of the removable device (12) on the base structure (16) of the motorized base (14);
• the removable device (12) includes another coupling that is complementary to the coupling (20) of the base structure (16) and is rotationally connected on one side with the main driver (24) and on the other side with the drive screw (38), the coupling (20) of the base structure and the other coupling of the removable device (12) being rotationally engaged when the removable device (12) is fixed on the base structure (16).
